# EUROPEAN PATENT SPECIFICATION

(11) **EP 3 501 692 B1**
(45) Date of publication and mention of the grant of the patent: **30.09.2020**
(21) Application number: 18188997.3
(22) Date of filing: 14.08.2018
(51) Int. Cl.: B22F 3/00, B33Y 10/00, B33Y 30/00, B33Y 50/02, B29C 64/165

(54) **METHOD AND APPARATUS FOR FABRICATING A THREE-DIMENSIONAL OBJECT**
VERFAHREN UND VORRICHTUNG ZUR HERSTELLUNG EINES DREIDIMENSIONALEN OBJEKTS
PROCÉDÉ ET APPAREIL DE FABRICATION D'OBJET TRIDIMENSIONNEL

(30) Priority: 20.12.2017 JP 2017243659
(43) Date of publication of application: 26.06.2019
(73) Proprietor: Ricoh Company, Ltd., Tokyo 143-8555 (JP)
(72) Inventor: SATOH, Shinichiroh, Tokyo, 143-8555 (JP)
(74) Representative: J A Kemp LLP

(56) References cited:
- EP-A1- 3 219 410
- JP-A- 2013 151 165
- US-A1- 2009 020 920
- US-A1- 2017 305 142

## Description

### BACKGROUND

### Technical Field

Aspects of the present disclosure relate to a method and an apparatus for fabricating a three-dimensional object.

### Related Art

A laser sintering method (LS), an electron-beam sintering method (EBM), and binder jet method (BJ) are known as three-dimensional fabrication methods employing powder lamination.

Generally, in the binder jet method, plaster is used as a powder, and binder ink is applied from an inkjet head to coagulate the powder to perform fabrication. Besides the above-described method, a technique is known that applies a binder resin from the inkjet head on sand as the powder to form a mold, for example. Further, there are methods that use metal, ceramic, and glass as the powder. A lamination fabrication method is also known in which the powder as described-above is coated with a material dissolvable in a fabrication liquid. The fabrication liquid is applied from the inkjet head so that the powder is bonded together through a coating material dissolved in the fabrication liquid.

Generally, in the binder jet method, a liquid cross-linking force acts between powder particles by ink application. The liquid cross-linking force causes the powder in an ink application region to coagulate. The ink easily isotropically permeates in a horizontal direction and a vertical direction, or the ink easily permeates in the horizontal direction. Thus, according to a conventional application method, in which ink is applied so that adjacent ink droplets are sufficiently overlapped to prevent defects to be formed inside the three-dimensional object, air present between the powder particles cannot escape with an increase of an area of the ink application. As a result, a problem occurs in that the voids penetrate the three-dimensional object and are formed on the surface of a three-dimensional object. Further, the voids and unevenness of voids are formed in the three-dimensional object.

In, for example, JP-2013-151165-A, a method for discharging liquid droplets at scattered positions (that is, in a thinned-out position) is disclosed. In JP-2013-151165-A, a curing liquid preferentially permeates downward so that permeation of curing liquid in a horizontal direction may be prevented. Thus, unevenness of a surface of the three-dimensional object may be reduced (see FIG. 5 in JP-2013-151165-A).

However, when a droplet is discharged to a position between positions where the previous droplets have been discharged, the droplets may prevent the air in the powder layer from escaping as the liquid droplets discharged between the positions continue to percolate through the powder. Thus, the method in JP-2013-151165-A may not solve the above-described problem.

For example, JP-3476678-B1 (JP-2000-15613-A) discloses a method in which a liquid is sprayed or discharged to an identical section for a plurality of times to cure the powder. An amount of liquid is smaller than an amount of completion of a progress of a hydration reaction. The method is performed for fabrication of a three-dimensional shape with good controllability while controlling a hydration reaction to a powder that reacts with water, such as grilled plaster.

However, the method in JP-3476678-B1 (JP-2000-15613-A) does not control wetting and spreading of one droplet of the fabrication liquid. The permeation of liquid proceeds throughout fabrication sections before the liquid penetrates into a lower layer. Thus, the liquid blocks the escape of the air and the above-described problem may not be solved.

US 2009/020920 A1, US 2017/305142 A1 and EP 3 219 410 A1 disclose background art to the present invention.

### SUMMARY

An object of the present disclosure is to provide a method of fabrication of a three-dimensional object capable of reducing voids in the three-dimensional object and unevenness of voids in the three-dimensional object.

In an aspect of this disclosure, a method for fabricating a three-dimensional object is defined by the claims.

In another aspect of the present disclosure, an apparatus for fabricating a three-dimensional object is defined by the claims.

The present disclosure can provide a method of fabrication of a three-dimensional object capable of reducing voids in the three-dimensional object and unevenness of voids in the three-dimensional object.

### BRIEF DESCRIPTION OF THE DRAWINGS

FIG. 1 is a plan view of an example of an apparatus for fabricating a three-dimensional object (fabrication apparatus) according to the present disclosure;
FIG. 2 is a side view of an example of the fabrication apparatus of the three-dimensional object according to the present disclosure;
FIG. 3 is a cross-sectional view of an example of the fabrication apparatus of the three-dimensional object according to the present disclosure;
FIG. 4 is a block diagram illustrating an example of a configuration of a controller of the fabrication apparatus according to the present disclosure;
FIGS. 5A through 5E are schematic cross-sectional views illustrating an example of a method for fabricating the three-dimensional object of the present disclosure;
FIGS. 6A through 6G are schematic cross-sectional views illustrating another example of a method for fabricating the three-dimensional object of the present disclosure;
FIGS. 7A through 7C are schematic cross-sectional views illustrating an example of permeation behavior of a fabrication liquid according to the present disclosure;
FIGS. 8A through 8C are schematic cross-sectional views illustrating a comparative example of permeation behavior of a fabrication liquid;
FIGS. 9A though 9D are schematic cross-sectional views illustrating an example of permeation behavior of the fabrication liquid in the present disclosure;
FIGS. 10A and 10B are schematic cross-sectional views illustrating another example of the permeation behavior of the fabrication liquid;
FIGS. 11A through 11D are schematic cross-sectional views illustrating another example of the permeation behavior of the fabrication liquid;
FIGS. 12A and 12B are schematic cross-sectional views illustrating another example of the permeation behavior of the fabrication liquid;
FIGS. 13A and 13B are schematic cross-sectional views illustrating another example of the permeation behavior of the fabrication liquid;
FIG. 14 illustrates an example of discharge patterns of the fabrication liquid according to the present disclosure; and
FIGS. 15A and 15E are photographs of a surface of the three-dimensional objects obtained from Examples and Comparative Examples.

### DETAILED DESCRIPTION

Hereinafter, a method and an apparatus for fabricating a three-dimensional object according to the present disclosure is described below in detail based on the attached drawings. It should be noted that the present disclosure is not limited to the embodiments described below. The present disclosure may be modified within a range that can be conceived by those skilled in the art. The modification includes such as substitution to other embodiments, additions, modifications, or deletions. Such modifications are within the scope of the present disclosure as long as the functions and effects of the present disclosure are exhibited.

### [Method and Apparatus for Fabricating a Three-dimensional Object]

A method for fabricating a three-dimensional object according to an embodiment of the present disclosure includes a powder layer forming step of forming a powder layer containing a molding powder, a discharging step of discharging droplets of the shaping liquid onto the powder layer by the discharging means, and a repeating step of repeating the powder layer forming step and the discharging step. The discharging step includes discharging droplets at the same position on the surface of the powder layer, setting a thickness of the powder layer as "h", setting a distance between centers of landing on the powder layer in the nearest neighboring droplet Is L, the discharge is performed so that h < L.

Further, an apparatus for manufacturing a three-dimensional object according to an embodiment of the present disclosure includes powder layer forming means for forming a powder layer containing a molding powder and discharging means for discharging liquid droplets of the shaping liquid onto the powder layer. The discharging means ejects a plurality of liquid droplets at the same position on the surface of the powder layer and sets the thickness of the powder layer to h and the distance between centers where the nearest neighbor liquid droplet lands on the powder layer is L. The discharge is performed such that the relation of h < L is satisfied.

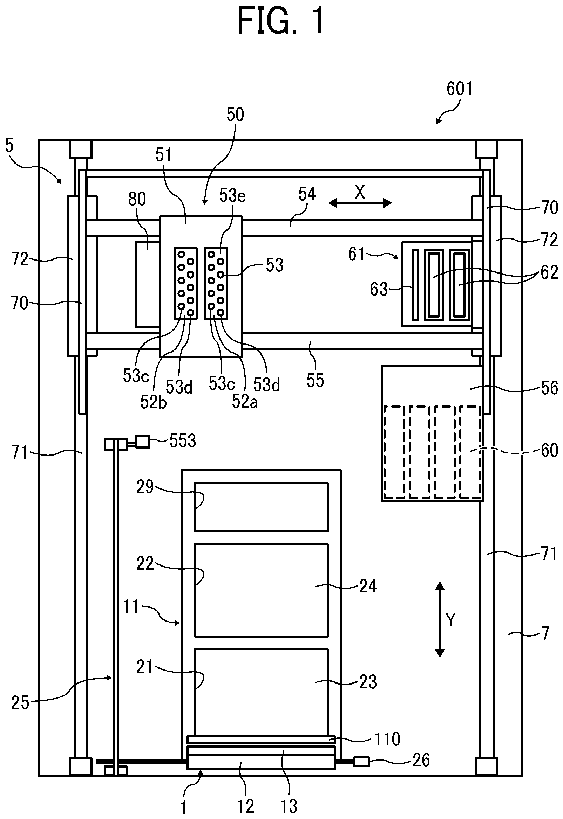

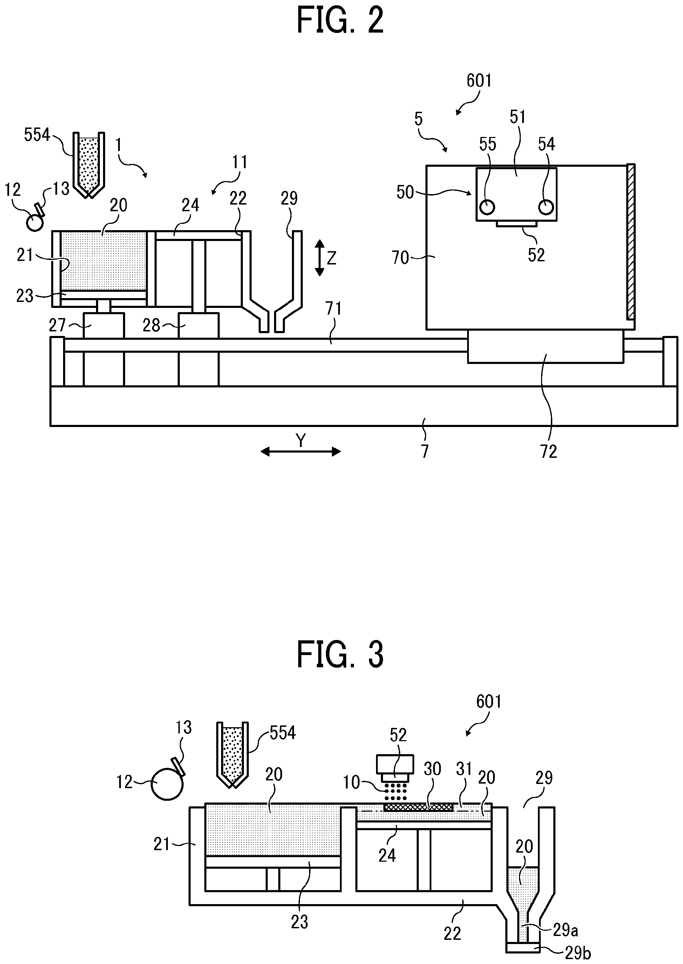

A method and an apparatus for fabricating a three-dimensional object according to a first embodiment of the present disclosure are described in further detail below with reference to FIGS. 1 through 3. FIG. 1 is a plan view for schematically illustrating an apparatus for fabricating a three-dimensional object according to the present embodiment. Hereinafter, "the apparatus for fabricating a three-dimensional object" is simply referred to as "fabrication apparatus". FIG. 2 is a schematic side view of the fabrication apparatus. FIG. 3 is a schematic cross-sectional view of the fabrication apparatus. FIG. 3 illustrates the method and the apparatus for fabricating the three-dimensional object according to the present embodiment. Note that FIG. 3 illustrates one point in time in a fabrication process.

A fabrication apparatus 601 is a powder lamination fabrication apparatus that laminates powder layers and fabricates a three-dimensional object. The fabrication apparatus 601 includes a fabrication section 1 and a fabrication unit 5. A fabrication layer 30 is formed in the fabrication section 1. The fabrication layer 30 is a layered three-dimensional object in which fabrication powders 20 are bonded together. The fabrication unit 5 discharges droplets 10a of a fabrication liquid 10 onto a powder layer 31 that is overlaid in layers in the fabrication section 1 to fabricate the fabrication layer 30.

The fabrication section 1 includes a powder chamber 11 and a flattening roller 12 as a rotating body, which is a flattening member (recoater). The flattening member may be, for example, a plate member (blade) in place of the rotating body.

The powder chamber 11 includes a supply chamber 21, a fabrication chamber 22, and a surplus powder receiving chamber 29. The supply chamber 21 holds fabrication powder 20 to be supplied to the fabrication chamber 22. Fabrication layers 30 (see FIG. 3) are laminated to form a three-dimensional object in the fabrication chamber 22. The surplus powder receiving chamber 29 receives and accumulates surplus fabrication powders 20 that were transferred and supplied by a flattening roller 12 from the supply chamber 21 to the fabrication chamber 22 during forming the powder layer 31 and fell from the fabrication chamber 22 without forming the powder layer 31.

The bottom portion of the supply chamber 21 is movable in a vertical direction (height direction) as a supply stage 23. Similarly, the bottom portion of the fabrication chamber 22 is movable in the vertical direction (height direction) as a fabrication stage 24. Fabrication layers 30 are laminated on the fabrication stage 24, and a three-dimensional object including the fabrication layers 30 is fabricated on the fabrication stage 24. The fabrication apparatus 601 includes an assembly for sucking the fabrication powder 20 on a bottom surface of the surplus powder receiving chamber 29 and a structure in which the surplus powder receiving chamber 29 can be easily removed.

Further, the supply stage 23 is raised and lowered in a direction of arrow Z (height direction, see FIG. 2) by a motor 27 to be described later, and the fabrication stage 24 is similarly raised and lowered in a direction of arrow Z by a motor 28.

The flattening roller 12 transfers and supplies the fabrication powder 20 supplied onto the supply stage 23 of the supply chamber 21 to the fabrication chamber 22 and uniformly flattens a surface of layers of the fabrication powder 20 supplied by the flattening roller 12 to form the powder layers 31. The flattening roller 12 functions as a flattening device. The flattening roller 12 is disposed to be reciprocally movable relative to a stage surface of the fabrication stage 24 in a direction indicated by arrow Y in FIG. 1 along the stage surface of the fabrication stage 24 by a reciprocal moving assembly 25. The stage surface is a surface on which the fabrication powder 20 is stacked. Further, the flattening roller 12 is rotationally driven by a motor 26 described later.

The fabrication unit 5 includes a liquid discharge unit 50 that discharges the droplets 10a of the fabrication liquid 10 to the powder layer 31 on the fabrication stage 24. The liquid discharge unit 50 includes a carriage 51 and two liquid discharge heads 52a and 52b that are discharge means mounted on the carriage 51. The number of the heads is not limited to two but may be one or three or more. Hereinafter, the liquid discharge heads 52a and 52b are simply referred to as "heads 52".

The carriage 51 is movably held by the guide members 54 and 55. The guide members 54 and 55 are held on the side plates 70 on both sides to be vertically movable. The carriage 51 is reciprocally moved in a direction indicated by arrow X via a pulley and a belt by an X-direction scanning motor constituting an X-direction scanning assembly 550 described later. The direction indicated by the arrow X is hereinafter simply referred to as "X direction" that is a main scanning direction, and the direction indicated by the arrow Y is simply referred to as "Y direction", and the direction indicated by the arrow Z is simply referred to as "Z direction".

Each of two heads 52a and 52b (hereinafter, simply referred to as "heads") includes two rows of nozzle arrays 53c and 53d in which a plurality of nozzles 53 for discharging the fabrication liquid 10 are arranged. Two nozzle arrays 53c and 53d of one of the head 52a discharges a cyan fabrication liquid and a magenta fabrication liquid, respectively. Two nozzle arrays 53c and 53d of the other of the head 52b discharge yellow fabrication liquid and black fabrication liquid, respectively. Note that a configuration of the heads is not limited to the configuration described above.

A plurality of tanks 60 containing the cyan fabrication liquid, the magenta fabrication liquid, the yellow fabrication liquid, and the black fabrication liquid, respectively, is mounted on a tank mount 56. The cyan fabrication liquid, the magenta fabrication liquid, the yellow fabrication liquid, and the black fabrication liquid are supplied to the heads 52a and 52b via a supply tube or the like.

Further, a maintenance assembly 61 for maintaining and recovering the heads 52 of the liquid discharge unit 50 is disposed on one side (right side in FIG. 1) in the X direction in the fabrication apparatus 601.

The maintenance assembly 61 mainly includes caps 62 and a wiper 63. The caps 62 are brought into close contact with the nozzle surface 53e (a surface on which the nozzles 53 are formed) of the head 52, and the caps 62 vacuum the fabrication liquid 10 from the nozzles 53. The caps 62 vacuum the fabrication liquid 10 from the nozzles 53 for discharging the fabrication powder 20 clogged in the nozzles 53 or for discharging a high-viscosity fabrication liquid 10. Then, the wiper 63 wipes the nozzle surface 53e to form meniscus in the nozzles 53. The meniscus is formed because an inside of the nozzles 53 is in a negative pressure state. Further, the maintenance assembly 61 covers the nozzle surfaces 53e of the heads 52 with the caps 62 to prevent entering of the fabrication powder 20 into the nozzles 53 and drying of the fabrication liquid 10 in the nozzles 53 when the fabrication liquid 10 is not discharged.

The fabrication unit 5 includes a slider 72 movably held by a guide member 71 disposed on a base member 7. The entire fabrication unit 5 is reciprocally movable in the Y direction (sub-scanning direction) perpendicular to the X direction. The entire fabrication unit 5 is reciprocally movable in the Y direction by a Y-direction scanning assembly 552 described below.

Further, the liquid discharge unit 50 is vertically movable together with the guide members 54 and 55 in the Z direction by a Z-direction elevation assembly 551 described below.

The fabrication section 1 is described below.

The fabrication section 1 includes a powder chamber 11. The powder chamber 11 has a box shape and includes chambers in which three upper surfaces of the supply chamber 21, the fabrication chamber 22, and the surplus powder receiving chamber 29 are opened. A supply stage 23 is vertically movable inside the supply chamber 21, and a fabrication stage 24 is vertically movable inside the fabrication chamber 22.

Side surfaces of the supply stage 23 are arranged to be in contact with an inner side surfaces of the supply chamber 21. Side surfaces of the fabrication stage 24 are arranged to be in contact with inner side surfaces of the fabrication chamber 22. The upper surfaces of the supply stage 23 and the fabrication stage 24 are kept horizontal.

The surplus powder receiving chamber 29 to receive surplus powder discharged outside the fabrication chamber 22 is disposed next to the fabrication chamber 22. The surplus powder receiving chamber 29 has a funnel shape and includes a discharge port 29a at a bottom of the surplus powder receiving chamber 29. The fabrication powder 20 in the surplus powder receiving chamber 29 is dischargeable from the discharge port 29a. The surplus powder receiving chamber 29 may include a cover 29b to close the discharge port 29a.

A surplus of the fabrication powder 20 in the fabrication powder 20 transferred and supplied by the flattening roller 12, when the powder layer 31 is formed, falls into the surplus powder receiving chamber 29. The surplus of the fabrication powder 20 fell into the surplus powder receiving chamber 29 is returned to a powder supply device 554 via, for example, a powder recovery and regenerating device. The powder supply device 554 supplies the fabrication powder 20 to the supply chamber 21.

The powder supply device 554 is described below.

The powder supply device 554 is disposed on the supply chamber 21. The powder supply device 554 supplies the fabrication powder 20 in a tank that constitutes the powder supply device 554 to the supply chamber 21 in an initial operation of a fabrication process of the three-dimensional object or when the amount of the fabrication powder 20 in the supply chamber 21 decreases. Examples of a method of conveyance of the powder for a powder supply include a screw conveyor system using a screw and an air conveying system using air.

The flattening roller 12 transports and supplies the fabrication powder 20 from the supply chamber 21 to the fabrication chamber 22 and flattens and levels a surface of laminated fabrication powder 20 to form a powder layer 31 which is a layered fabrication powder 20 having a predetermined thickness. The flattening roller 12 is a rod having a length larger than an inner dimension of the fabrication chamber 22 and the supply chamber 21. The inner dimension of the fabrication chamber 22 and the supply chamber 21 is a width of a portion to which the fabrication powder 20 is provided or supplied. A reciprocal moving assembly 25 reciprocally moves the flattening roller 12 along a stage surface of the fabrication chamber 22 in the Y-direction (sub-scanning direction).

Further, the flattening roller 12 horizontally moves from the outside of the supply chamber 21 to pass above the supply chamber 21 and the fabrication chamber 22 while being rotated by the motor 26 driven by the motor driver 516 and horizontally moved by the motor 553 of the reciprocal moving assembly 25. Thus, the fabrication powder 20 is transported and supplied onto the fabrication chamber 22, and the flattening roller 12 passes over the fabrication chamber 22 to flatten the surface of the fabrication powder 20 to from the powder layer 31.

Further, as illustrated in FIG. 2, the fabrication apparatus 601 includes a powder removal plate 13 that is a powder remover in contact with a peripheral surface of the flattening roller 12 to remove the fabrication powder 20 adhered to the flattening roller 12. The powder removal plate 13 moves together with the flattening roller 12 in a state of being in contact with the peripheral surface of the flattening roller 12. Further, the powder removal plate 13 may be arranged in a counter direction of a rotation direction of the flattening roller 12 when the flattening roller 12 performs a flattening operation. Conversely, the powder removal plate 13 may be arranged in a forward direction of the rotation direction of the flattening roller 12 when the flattening roller 12 performs a flattening operation.

In the present embodiment, the liquid discharge unit 50 moves in a direction of the surface of the powder layer 31. However, the present disclosure is not limited to the embodiment described above. For example, an embodiment of the present disclosure may include a configuration in which the fabrication stage 24 (powder chamber 11) moves in the direction of the surface of the powder layer 31. In this case, the fabrication apparatus 601 includes a moving assembly such as motor to move the fabrication stage 24 (powder chamber 11) in the direction of the surface of the powder layer 31, that is, in an X and Y direction.

### [General Configuration of Controller and Flow of Fabrication Process]

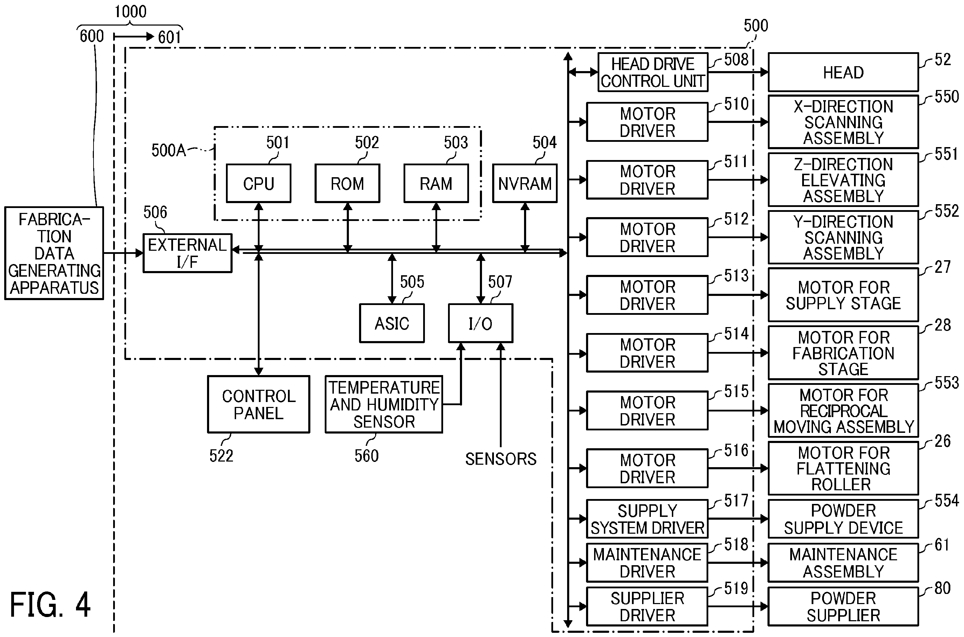

Next, a general configuration of the controller 500 in the fabrication apparatus 601 of the three-dimensional object according to the present embodiment is described with reference to FIG. 4. FIG. 4 is a block diagram of the controller 500.

The controller 500 includes a main control unit 500A including circuitry such as a central processing unit (CPU) 501, a read-only memory (ROM) 502, and a random access memory (RAM) 503. The CPU 501 controls the entire fabrication apparatus 601. The ROM 502 stores programs, which include a program to cause the CPU 501 to perform the control, and other fixed data. The RAM 503 temporarily stores print data and the like.

The controller 500 includes a nonvolatile RAM (NVRAM) 504 for holding data while the power of the fabrication apparatus 601 is off. The controller 500 also includes an application-specific integrated circuit (ASIC) 505 for processing image processing for performing various signal processing and the like on image data and other input / output signals for controlling the entire fabrication apparatus 601.

The controller 500 further includes an external interface (I/F) 506 to send and receive data and signals used in receiving fabrication data from a fabrication data generating apparatus 600 (an external device).

The fabrication data generating apparatus 600 generates fabrication data in which a final-form object (three-dimensional object) is virtually sliced in multiple fabrication layers. The fabrication data generating apparatus 600 is constituted of an information processing apparatus, such as a personal computer.
The controller 500 includes an input-and-output (I/O) 507 for receiving detection signals from various sensors. The controller 500 includes a head drive control unit 508 that drives and controls the heads 52 of the liquid discharge unit 50.

The controller 500 includes a motor driver 510 for driving a motor constituting an X-direction scanning assembly 550 and a motor driver 512 for driving a motor constituting a Y-direction scanning assembly 552. The X-direction scanning assembly 550 moves the carriage 51 of the liquid discharge unit 50 in the X-direction (main-scanning direction). The Y-direction scanning assembly 552 moves the fabrication unit 5 in the Y-direction (sub-scanning direction)

The controller 500 includes a motor driver 511 that drives a motor constituting a Z-direction elevation assembly 551. The Z-direction elevation assembly 551 moves (raises and lowers) the carriage 51 of the liquid discharge unit 50 in the Z-direction. The Z-direction elevation assembly 551 may move (raises and lowers) the entire fabrication unit 5 in the Z-direction.

The controller 500 includes a motor driver 513 that drives the motor 27 for raising and lowering the supply stage 23 and a motor driver 514 for driving the motor 28 for raising and lowering the fabrication stage 24.

The controller 500 includes a motor driver 515 that drives a motor 553 of a reciprocal moving assembly 25 that moves the flattening roller 12 and a motor driver 516 that drives a motor 26 that rotationally drives the flattening roller 12.

The controller 500 includes a supply system driver 517 that drives a powder supply device 554 that supplies the fabrication powder 20 to the supply chamber 21 and a maintenance driver 518 that drives the maintenance assembly 61 of the liquid discharge unit 50.

The controller 500 includes a supply driver 519 for driving the powder supplier 80 to supply the fabrication powder 20 to the powder chamber 11.

Detected signals of a temperature and humidity sensor 560 to detect the temperature and the humidity as the environment condition of the device and detected signals from other sensors are input into the I/O 507 of the controller 500.

The controller 500 is coupled to a control panel 522 for inputting and displaying information necessary for the fabrication apparatus 601.

The controller 500 receives the fabrication data from the fabrication data generating apparatus 600 as described above. The fabrication data includes shape data (fabrication data) of each fabrication layer 30 as the slice data obtained by virtually slicing the shape of the target three-dimensional object into multiple layers.

Then, a main control unit 500A controls the heads 52 to discharge the fabrication liquid 10 according to the fabrication data of the fabrication layer 30.

A fabrication system 1000 includes the fabrication data generating apparatus 600 and the three-dimensional fabrication apparatus (powder lamination fabrication apparatus) 601.

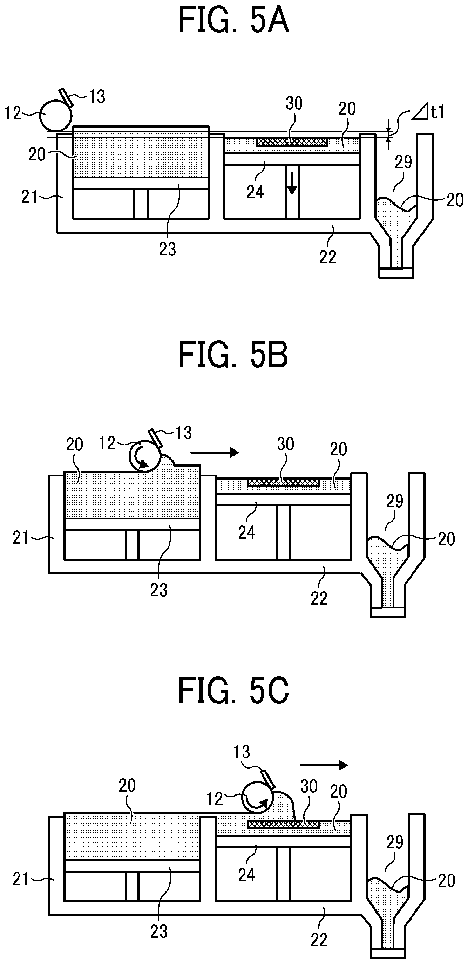

FIGS. 5A through 5E illustrate a method and an apparatus for fabricating the three-dimensional object according to the present embodiment. The method for fabricating a three-dimensional object according to the present embodiment includes a powder layer forming step of forming the powder layer 31 containing a fabrication powder 20, a discharging step of discharging droplets 10a of the fabrication liquid 10 onto the powder layer 31 by the heads 52, and step of repeating the powder layer forming step and the discharging step. In the liquid discharging step, the heads 52 discharges the liquids to the same location on the surface of the powder layer 31.

Following describes a flow of fabrication in a method for fabricating the three-dimensional object according to the present embodiment with reference to FIGS. 5A through 5E. FIGS. 5A through 5E are schematic cross-sectional views illustrating the flow of fabrication of the three-dimensional object. Here, following description starts from a state in which a first layer of the fabrication layer 30 is formed on the fabrication stage 24 of the fabrication chamber 22. When forming the next fabrication layer 30 on the first layer of the fabrication layer 30, the supply stage 23 of the supply chamber 21 is raised and the fabrication stage 24 of the fabrication chamber 22 is lowered as illustrated in FIG. 5A.

At this time, a lowering distance of the fabrication stage 24 is set so that a distance between an upper surface (a surface of a powder layer 31) of the fabrication chamber 22 and a lower portion (lower tangential portion) of the flattening roller 12 becomes Δt1. The distance (thickness) Δt1 is preferably about several tens µm to about 100 µm.

In the present embodiment, the flattening roller 12 is disposed to form a gap between an upper end surface of the supply chamber 21 and an upper end surface of the fabrication chamber 22. Thus, when the fabrication powder 20 is transported and supplied to the fabrication chamber 22 and flattened, the surface (powder surface) of the powder layer 31 is higher than the upper end surfaces of the supply chamber 21 and the fabrication chamber 22.

Thus, the present embodiment can reliably prevent the flattening roller 12 from coming into contact with the upper end surfaces of the supply chamber 21 and the fabrication chamber 22. Thus, the present embodiment can reduce a damage of the flattening roller 12. When the surface of the flattening roller 12 is damaged, streaks are generated on the surface of the powder layer 31 that deteriorate the flatness of the powder layer 31.

Next, as illustrated in FIG. 5B, the fabrication powder 20 positioned above the upper surface level of the supply chamber 21 is moved toward the fabrication chamber 22 while rotating the flattening roller 12 in the counter direction indicated by arrow in FIG. 5B so that the fabrication powder 20 is transported to the fabrication chamber 22 (powder supply step).

Next, as illustrated in FIG. 5C, the flattening roller 12 is moved in parallel to a stage surface of the fabrication stage 24 of the fabrication chamber 22, and a powder layer 31 having a predetermined distance (thickness) of Δt1 is formed on the fabrication layer 30 of the fabrication stage 24 (flattening step). At this time, the surplus fabrication powder 20 not used for forming the powder layer 31 falls into the surplus powder receiving chamber 29.

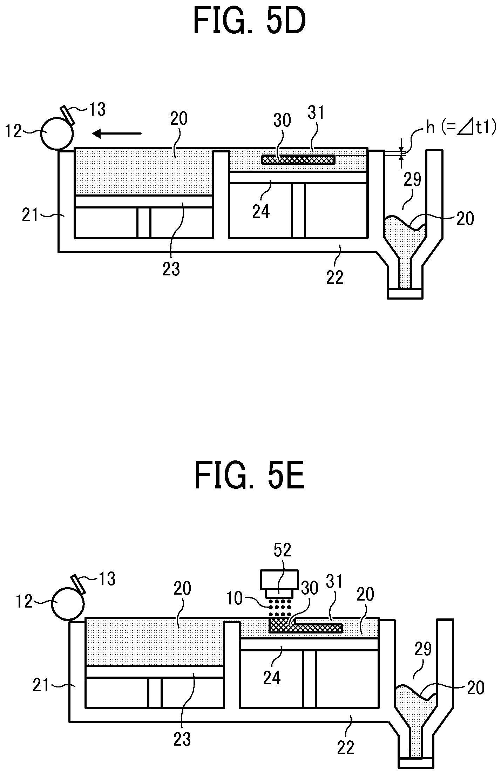

After forming the powder layer 31, the flattening roller 12 is moved to the supply chamber 21 side as illustrated in FIG. 5D and returned to an initial position (original position) (returning step).

Here, the flattening roller 12 can move while maintaining a constant distance from the upper surface level of the fabrication chamber 22 and the supply chamber 21. The present embodiment can move the flattening roller 12 while maintaining the constant distance. Thus, the present embodiment can form the powder layer 31 having a uniform thickness h (corresponding to the distance (laminating pitch) Δt1) on the fabrication chamber 22 or a previously formed fabrication layer 30 while transporting the fabrication powder 20 to a position above the fabrication chamber 22 by the flattening roller 12.

Hereinafter, a thickness "h" of the powder layer 31 and the laminating pitch Δt1 are sometimes explained without distinction, but unless otherwise specified, the thickness "h" and the lamination pitch Δt1 are the same thickness and have the same meaning. Alternatively, the thickness "h" of the powder layer 31 may be actually measured, and in this case, it is preferable to obtain an average value of the thickness "h" measured at a plurality of positions.

Then, as illustrated in FIG. 5E, the heads 52 of the liquid discharge unit 50 discharges the droplets 10a of the fabrication liquid 10 to form the fabrication layer 30 having a desired shape in the next powder layer 31 (fabrication step).

For example, the fabrication layer 30 is formed by mixing the droplets 10a of the fabrication liquid 10 discharged from the head 52 with the fabrication powder 20. The droplets 10a of the fabrication liquid 10 causes adhesive contained in the fabrication powder 20 to dissolve. Dissolved adhesive in the fabrication powder 20 are bonded together to bond the fabrication powder 20.

Next, the powder layer forming step and the discharging step described above are repeated to form a new fabrication layer 30. At this time, the new fabrication layer 30 and the fabrication layer 30 one layer below the new fabrication layer 30 are integrated to form a part of a three-dimensional object (also referred to as a three-dimensional object, a three-dimensional object, etc.). Then, the powder layer forming step and the discharging step are repeated to complete the fabrication of the three-dimensional object.

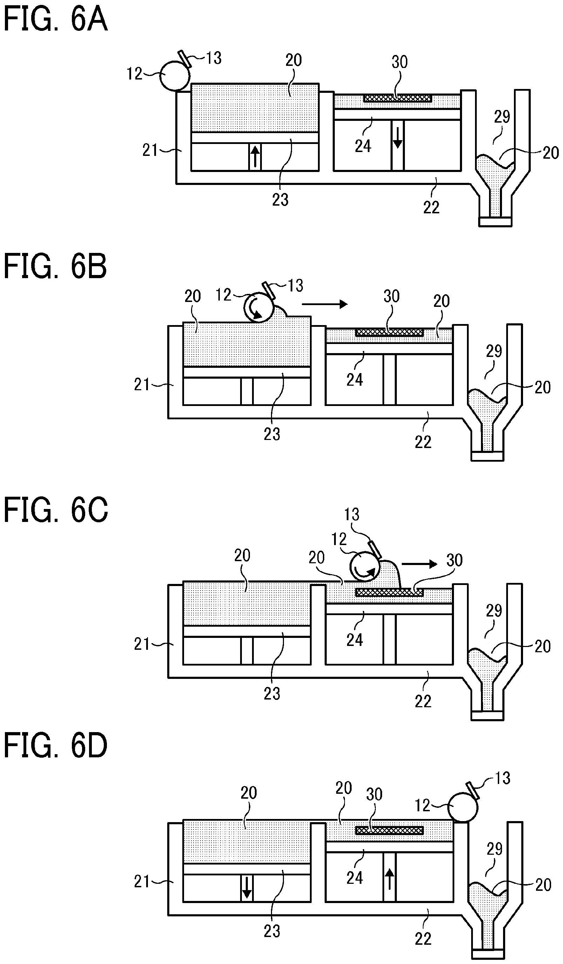

Next, other embodiments in the powder layer forming step is described with reference to FIGS. 6A through 6G. FIGS. 6A through 6G are schematic cross-sectional views illustrating the flow of fabrication of the three-dimensional object.

The present embodiment is different from the above embodiment in that the fabrication stage 24 of the fabrication chamber 22 is further raised after the flattening roller 12 moves from the supply chamber 21 to the fabrication chamber 22. Thus, the present embodiment can reduce an amount of surplus fabrication powder 20 conveyed to the surplus powder receiving chamber 29 during powder conveyance, further improves a smoothness of the powder layer 31, and increases the powder density. Following mainly describes a difference between the embodiment in FIGS. 6A through 6D and the embodiment in FIGS. 5A through 5E.

FIGS. 6A through 6D illustrate the fabrication processes from a state in which the first layer of the fabrication layer 30 is formed on the fabrication stage 24 of the fabrication chamber 22 as in FIGS. 5A through 5E.

As illustrated in FIG. 6A, the supply stage 23 of the supply chamber 21 is raised, and the fabrication stage 24 of the fabrication chamber 22 is lowered. At this time, the lowering distance of the fabrication stage 24 is made larger than the thickness "h" of the powder layer 31 in the above-described embodiment. The lowering distance of the fabrication stage 24 is preferably equal to or less than twice the thickness "h".

Next, in FIGS. 6B and 6C, as similar to FIGS. 5B and 5C, the flattening roller 12 is moved to the fabrication chamber 22, and the fabrication powder 20 is conveyed to the fabrication chamber 22 from the supply chamber 21. At this time, the surplus fabrication powder 20 not used for forming the powder layer 31 falls into the surplus powder receiving chamber 29.

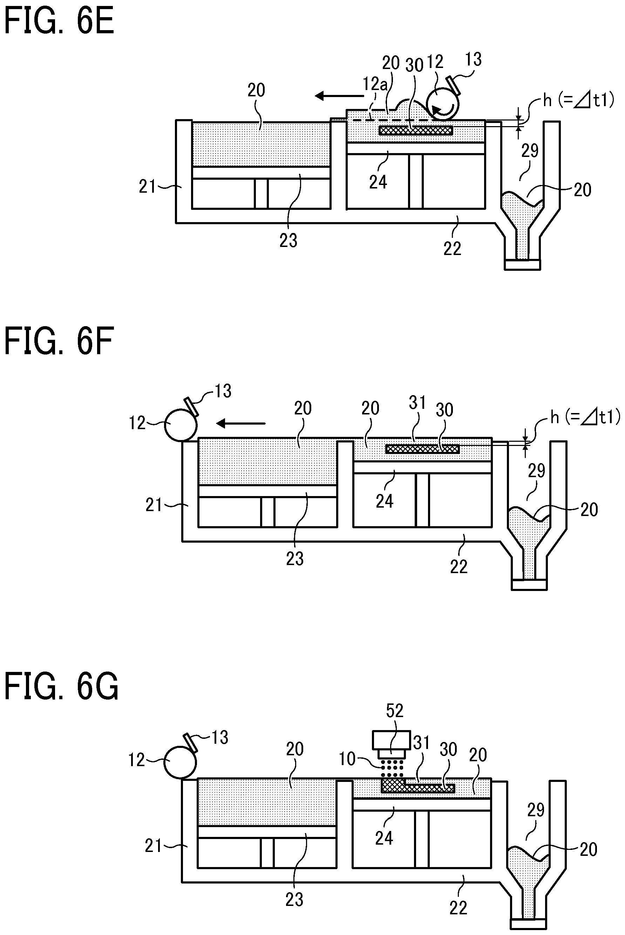

FIG. 6D illustrates a state after the flattening roller 12 has moved to the fabrication chamber 22 side. At this point, the powder layer 31 thicker than the thickness "h" is formed on the fabrication chamber 22 of the fabrication stage 24. In the subsequent steps, the fabrication stage 24 is raised and the supply stage 23 is lowered so that the distance between the fabrication layer 30 and the moving line 12a of the flattening roller 12 becomes the thickness "h" (= Δt1). The moving line 12a is indicated by broken line in FIG. 6E.

As illustrated in FIGS. 6E and 6F, the flattening roller 12 is moved to the supply chamber 21 side to return the surplus powder to the supply chamber 21. Thus, the surface of the fabrication layer 30 is flattened. Thus, the present embodiment can reduce the amount of surplus fabrication powder 20 conveyed to the surplus powder receiving chamber 29 during powder conveyance. Further, the flattening roller 12 flattens the powder layer 31 in both of a forward path and a backward path. Thus, the present embodiment can further improve the smoothness of the powder layer 31 and increase a powder density of the powder layer 31.

Then, as illustrated in FIG. 6G, the heads 52 of the liquid discharge unit 50 discharges the droplets 10a of the fabrication liquid 10 onto the fabrication layer 30 to form the fabrication layer 30 as similarly to the embodiment illustrated in FIG. 5E and the processes after FIG. 5E.

### [Fabrication Powder and Fabrication Liquid]

Next, an embodiment of a fabrication powder and a fabrication liquid to be used in the present disclosure is described.

The fabrication powder is not particularly limited and may be appropriately changed. For example, fabrication powder may include a substrate and a coating layer, or may include a substrate, a coating layer, and a polymeric resin fine particle, or may include a polymeric resin particle adhered to a substrate, and the like.
As the material contained in the coating layer, for example, a resin can be used, and the thickness of the coating layer is preferably, for example, 5 to 500 nm on average.

### [Resin]

The resin preferably has a property of being dissolved in the fabrication liquid 10 and cross-linkable by an action of a cross-linking agent contained in the fabrication liquid 10. The resin preferably has a solubility in which 90% by mass or more of the resin is dissolved in the fabrication liquid 10 when 1 g of the resin is mixed with 100 g of solvent constituting the fabrication liquid 10 at temperature of 30°C and is stirred.

Further, the resin is preferable to have a viscosity of 40 mPa·s or less in 4% by mass (w/w%) solution at temperature of 20°C. The resin is more preferable to have a viscosity of 1 mPa·s or more and 35 mPa·s or less. The resin is particularly preferable to have a viscosity of 5 mPa·s or more and 30 mPa·S or less.

When the viscosity of the resin is 40 mPa·s or less, a strength of the three-dimensional object formed by applying the fabrication liquid 10 to the powder material for fabrication is improved. Thus, problems such as collapse of shape of the three-dimensional object are less likely to occur during subsequent processing such as sintering or handling. Further, a dimensional precision of the obtained three-dimensional object tends to improve. The viscosity can be measured, for example, in accordance with JIS K 7117.

The resin is not particularly limited and may be appropriately selected depending on the purpose. The resin is preferable to be water-soluble from viewpoints of ease of handling, environmental burden, etc. Examples of the resin include a water-soluble resin and a water-soluble prepolymer. An aqueous medium may also be used as a medium for the fabrication liquid 10 for the powder material for fabrication that adopts such a water-soluble resin. Further, when the powder material is discarded or recycled, the powder material is easy to be separated into the resin and the substrate by water treatment.

Examples of the water-soluble resin include polyvinyl alcohol resin, polyacrylic acid resin, cellulose resin, starch, gelatin, vinyl resin, amide resin, imide resin, acrylic resin, polyethylene glycol, and the like. The water-soluble resin may be homopolymers or heteropolymers (copolymers) as long as the water-soluble resin exhibit the water solubility. The water-soluble resin may be modified. A known functional group may be introduced to the water-soluble resin. The water-soluble resin of a salt form may be used.

For example, the water-soluble resin may be polyvinyl alcohol, or modified polyvinyl alcohol such as acetoacetyl group, acetyl group, silicone, or the like (acetoacetyl group-modified polyvinyl alcohol, acetyl group-modified polyvinyl alcohol, or silicone modified polyvinyl alcohol, etc.). The water-soluble resin may be butanediol vinyl alcohol copolymer or the like. Further, the water-soluble resin may be polyacrylic acid, or a salt such as sodium polyacrylate as long as the polyacrylic acid resin is used.

As long as the resin is a cellulose resin, the resin may be, for example, cellulose or carboxymethyl cellulose (CMC) or the like. Further, as long as the resin is acrylic resin, for example, polyacrylic acid, acrylic acid, maleic anhydride copolymer, or the like may be used.

Examples of the water-soluble prepolymer include an adhesive water-soluble isocyanate prepolymer contained in a water stopping agent and the like.

Examples of resins other than water-soluble resins include acrylic, maleic acid, silicone, butyral, polyester, polyvinyl acetate, vinyl chloride and vinyl acetate copolymer, polyethylene, polypropylene, polyacetal, ethylene and vinyl acetate copolymer, ethylene and (meth)acrylic acid copolymer, α-olefin and maleic anhydride copolymer, esterified product of α-olefin and maleic anhydride copolymer, polystyrene, poly(meth)acrylic acid ester, α-olefin and maleic anhydride and vinyl group-containing monomer copolymer, styrene and maleic anhydride copolymer, styrene and (meth)acrylic acid ester copolymer, polyamide, epoxy resin, xylene resin, ketone resin, petroleum resin, rosin or derivative of rosin, coumarone-indene resin, terpene resin, polyurethane resin, styrene and butadiene rubber, polyvinyl butyral, nitrile rubber, acrylic rubber, synthetic rubbers such as ethylene and propylene rubber, nitrocellulose, and the like.

Among the resins, the resin having a cross-linkable functional group is preferable. The cross-linkable functional group is not particularly limited and may be appropriately selected according to the purpose. Examples of the cross-linkable functional group include a hydroxyl group, a carboxyl group, an amide group, a phosphoric acid group, a thiol group, an acetoacetyl group, an ether bond, and the like. The resin preferably has the cross-linkable functional group because the resin can easily crosslink to form a three-dimensional object. Among the cross-linkable functional group, a polyvinyl alcohol resin having an average polymerization degree of 400 or more and 1100 or less is preferable.

As the resin, one type may be used alone, two or more types may be used in combination, an appropriately synthesized one may be used, or a commercially available one may be used.

Examples of the commercially available products of the resin include polyvinyl alcohol (PVA-205C, PVA-220C, manufactured by Kuraray Co., Ltd.), polyacrylic acid (Jurimer AC-10, manufactured by Toagosei Co., Ltd.), sodium polyacrylate acid (Jurimer AC-103P, manufactured by Toagosei Co., Ltd.), acetoacetyl group-modified polyvinyl alcohol (GOHSENEX Z-300, GOHSENEX Z-100, GOHSENEX Z-200, GOHSEX Z-205, GOHSENEX Z-210, GOHSENEX Z-220, manufactured by Nippon Synthetic Chemical Industry Co., Ltd.), Carboxy group-modified polyvinyl alcohol (GOHSENEX T-330, GOHSENEX T-350, GOHSENEX T-330T, manufactured by Nippon Synthetic Chemical Industry Co., Ltd.), butanediol vinyl alcohol copolymer (NICHIGO G-polymer-OKS-8041, Manufactured by Nippon Synthetic Chemical Industry Co., Ltd.), Carboxymethyl cellulose sodium (CELOGEN 5A, CELLOGEN 6A, manufactured by Dai-ichi Kogyo Seiyaku Co., Ltd.), starch (Highstade PSS-5, manufactured by Sanwa Starch Co., Ltd.), gelatin (BeMatrix gelatin, manufactured by Nitta Gelatin Inc.), and the like.

### [Base Material]

The base material is not particularly limited as long as the base material has a form of powder or particles. The base material can be appropriately selected according to the purpose. Examples of the material of the base material include metal, ceramics, glass, carbon, polymer, wood, biocompatible material, sand, magnetic material, and the like. From a viewpoint of obtaining an extremely high-strength three-dimensional sintered product, the material such as metal, ceramics, or the like that can finally be sintered is more preferable.

The metal is not particularly limited as long as the material contains a metal. Examples of the metal include Mg, Al, Ti, V, Cr, Mn, Fe, Co, Ni, Cu, Zn, Y, Zr, Nb, Mo, Pd, Ag, In, Sn, Ta, W, Nd and alloys of the metals described above. Among the metals, stainless steel (SUS), iron, copper, silver, titanium, aluminum, alloys of the metals described above, and the like are suitably used.

Examples of the stainless steel (SUS) include SUS 304, SUS 316, SUS 316L, SUS 317, SUS 329, SUS 410, SUS 430, SUS 440, SUS 630, and the like.

Examples of the ceramics include oxides, carbides, nitrides, hydroxides, and the like. Examples of the oxide include silica (SiO₂), alumina (Al₂O₃), zirconia (ZrO₂), titania (TiO₂) and the like. However, the above examples are only one of examples, and the present disclosure is not limited to the examples described above. The materials described above may be used alone, or two or more of the materials may be used in combination.

Commercially available base materials may be used as the base materials. As an example of commercially available products of the base materials, there are PSS 316L made by Sanyo special Steel Co. Ltd. for stainless steel, EXCELICA SE-15 made by Tokuyama Corporation for silica, Tai-Micron TM-5D made by Taimei Chemicals Co., Ltd for alumina, and TZ-B53 made by Tosoh Corporation for zirconia etc., for example.

The base material can also be subjected to a surface treatment, which is sometimes effective in improving adhesion to a resin and improving coating properties. Conventionally known surface treatment agents may be used.

An average particle size of the base material is not particularly limited and can be appropriately selected according to the purpose. For example, the average particle size is preferably 2 to 100 µm, more preferably 8 to 50 µm. The average particle diameter of the base material of 2 µm or more can prevent an increase of an influence of aggregation and facilitate resin coating on the base material. Thus, the base material having the average particle diameter of 2 µm or more can prevent a reduction in yield, a reduction in production efficiency of the fabrication product and prevent deterioration of handling property of the base material. Conversely, the average particle size of the base material of 100 µm or less can prevent decrease in a number of contacts between the particles and prevent increase in voids. Thus, it is possible to prevent weakening of the three-dimensional object and the sintered material.

A particle size distribution of the base material is not particularly limited and may be appropriately selected according to the purpose. However, a shaper particle size distribution is preferable. The average particle size of the base material can be measured using a known particle diameter measuring device, and as one example, there is a particle size distribution measuring device Microtrac MT 3000 II series (manufactured by MicrotracBel Corp.) and the like.

The base material can be produced by a conventionally known method. As a method for producing a powder-shaped or particle-shaped base material, for example, there are a pulverization method in which a solid is fragmented by applying compression, impact, friction or the like, an atomization method in which a melted base material is sprayed and rapidly cooled to obtain a quenched powder, a deposition method that deposits a component dissolved in a liquid, and a gas-phase reaction method that vaporizes and crystalizes the base material, and the like.

The base material is not limited by the production method, but as a more preferable method, a spherical shape can be obtained and an atomization method with small variations in particle diameter can be mentioned. Examples of the atomizing method include a water atomizing method, a gas atomizing method, a centrifugal atomizing method, a plasma atomizing method, and the like, and any one of the methods described-above is suitably used.

### [Polymer Resin Particle]

The polymer resin particles are not particularly limited, and may be suitably modified, and known polymeric resin particles may be used.
The average particle diameter of the polymer resin particle is not particularly limited, but is preferably 0.1 to 100 µm, and more preferably 5 to 20 µm.

A state of adhesion of organic particles (also referred to as "organic external additives") such as polymer resin particles to the base material can be observed with a field emission type scanning electron microscope JSM-7400F manufactured by JEOL Ltd. or a real surface view microscope VE-7800 manufactured by Keyence Corporation. A coating process such as carbon deposition or gold evaporation is performed on a surface of the organic particles, and the state of adhesion is observed and determined by whether the organic particles forms a particle structure or an island structure in which organic particles are aggregated by ten or more particles, for example, at an observation magnification of 10,000 to 30,000 times.

### [Other components of fabrication powder]

Other components may be added to the fabrication powder. The other components are not particularly limited and may be appropriately selected according to the purpose. For example, fillers, leveling agents, sintering aids, and the like can be selected as the other components of the fabrication powder.

### [Filler]

The filler is a material effective mainly for attaching to the surface of the fabrication powders or for filling gaps between the powder materials. The filler has an effect of, for example, improving a fluidity of the fabrication powders, increasing a number of contact points between the powder materials, and reducing the voids between the powder materials. Thus, an effect of enhancing a strength and a dimensional accuracy of the three-dimensional object may be obtained by the filler in some cases.

### [Leveling agent]

The leveling agent is a material effective mainly for controlling the wettability of the surface of the fabrication powder. The leveling agent has an effect of increasing a permeability of the fabrication liquid into the powder layer, increasing the strength of the three-dimensional object and a speed of increasing the strength of the three-dimensional object, for example. Thus, the leveling agent is effective to stably maintain the shape of the three-dimensional object.

### [Sintering aid]

The sintering aid is an effective material for improving sintering efficiency when sintering the obtained three-dimensional object. The sintering aid has the effect of improving the strength of a three-dimensional object, lowering the sintering temperature, and reducing the sintering time, for example.

### [Liquid component of fabrication liquid]

The fabrication liquid of the present embodiment is in a liquid state at room temperature. Thus, the fabrication liquid contains a liquid component. The liquid component can be appropriately changed, and water or a water-soluble solvent is suitably used as the liquid component. Water is particularly used as a main component of the liquid component. Thus, the liquid component of the fabrication liquid can increase the solubility of the resin and produce a high-strength three-dimensional object.

A proportion of water in entire fabrication liquid is preferably 40% by mass or more and 85% by mass or less and is more preferably 50% by mass or more and 80% by mass or less. If the proportion of water in the fabrication liquid is within an above-described range, a solubility of the resin is improved, and the strength of the three-dimensional object is increased. Further, the fabrication liquid can prevent the nozzles 53 from drying during standby, clogging, and a nozzle missing.

The water-soluble solvent is effective for enhancing moisture retention and discharge stability of the heads 52, particularly when the heads 52 discharges the fabrication liquid from the nozzles 53. If the moisture retention and the discharge stability are decreased, the nozzles 53 may be dried that may cause unstable discharge or clogging of the nozzles 53. Thus, the strength of the three-dimensional object may be deteriorated, and dimensional accuracy of the three-dimensional object may be decreased. Many of the water-soluble solvents have higher viscosity and boiling point than water. The water-soluble solvents are particularly effective in functioning as a wetting agent, a drying inhibitor, and a viscosity adjusting agent of the fabrication liquid.

The water-soluble solvent is not particularly limited as long as the water-soluble solvent is a liquid having water solubility. The components of the water-soluble solvent may be appropriately changed. For example, alcohols such as ethanol, propanol and butanol, ethers, ketones, and the like may be used as the water-soluble solvent. Specific examples include 1,2,6-hexanetriol, 1,2-butanediol, 1,2-hexanediol, 2-pentanediol, 1,3-dimethyl-2-imidazolidinone, 1,3-butanediol, 1,3-propanediol, 1,4-butanediol, 1,5-pentanediol, 1,6-hexanediol, 2,2-dimethyl- 1,3-propanediol, 2,3-butanediol, 2,4-pentanediol, 2,5-hexanediol, 2-ethyl-1,3-hexanediol, 2-pyrrolidone, 2-methyl-1, 3-propanediol, 2-methyl-2, 4-pentanediol, 3-methyl-1, 3-butanediol, 3-methyl-1, 3-hexanediol, N-methyl-2-pyrrolidone, N-methylpyrrolidinone, β-butoxy-N, N-dimethylpropionamide, β-methoxy-N, N-dimethylpropionamide, γ-butyrolactone, ε-caprolactam, ethylene glycol, ethylene glycol-n-butyl ether, ethylene glycol-n-propyl ether, ethylene glycol phenyl ether, ethylene glycol mono-2-ethylhexyl ether, ethylene glycol monoethyl ether, glycerin, diethylene glycol, diethylene glycol-n-hexyl ether, diethylene glycol methyl ether, diethylene glycol monoethyl ether, diethylene glycol monobutyl ether, diethylene glycol monomethyl ether, diglycerin, dipropylene glycol, dipropylene glycol n-propyl ether, dipropylene glycol monomethyl ether, dimethyl sulfoxide, sulfolane, thiodiglycol, tetraethylene glycol, triethylene glycol, triethylene glycol ethyl ether, triethylene glycol dimethyl ether, triethylene glycol monobutyl ether, triethylene glycol methyl ether, tripropylene glycol, tripropylene glycol-n-propyl ether, tripropylene glycol methyl ether, trimethylol ethane, trimethylol propane, propyl propylene diglycol, propylene glycol, propylene glycol-n-butyl ether, propylene glycol-t-butyl ether, propylene glycol phenyl ether, propylene glycol monoethyl ether, hexylene glycol, polyethylene glycol, and polypropylene glycol. However, the above-described components are only an example, and the present disclosure is not limited to the components described above.

The proportion of the water-soluble solvent in the entire fabrication liquid is preferably from 5% by mass to 60% by mass, more preferably from 10% by mass to 50% by mass, and still more preferably from 15% by mass to 40% by mass. When the content of the water-soluble solvent in the fabrication liquid is 5% by mass or more, the water-soluble solvent can improve the moisture retaining power of the fabrication liquid. Thus, the water-soluble solvent can suppress discharge failure due to progression of drying of the nozzles 53 in the heads 52 during standby.

Further, the water-soluble solvent can prevent a discharge amount of the fabrication liquid from the heads 52 at time of checking performed beforehand to be different from a discharge amount of the fabrication liquid from the heads 52 at time of actual discharge. Thus, the three-dimensional object having desired strength and shape can be obtained.

When the content of the water-soluble solvent in the fabrication liquid is 60% by mass or less, the water-soluble solvent can prevent a viscosity of the fabrication liquid to become excessively high to improve discharge stability. Further, the water-soluble solvent can prevent decrease in a solubility of the resin in the fabrication powder and prevent decrease in the strength of the three-dimensional object. Further, the water-soluble solvent can reduce time to dry the three-dimensional object. Thus, a decrease in production efficiency and deformation of the three-dimensional object can be prevented.

### [Other components of the fabrication liquid]

The fabrication liquid may contain other components such as a wetting agent, a drying inhibitor, a viscosity adjusting agent, a surfactant, a penetrating agent, a cross-linking agent, a defoaming agent, a pH adjusting agent, a preservative, a mildew-proofing agent, a coloring agent, preservatives, stabilizers, and the like, known materials as described above can be added without limitation.

### [Surfactant]

The surfactant is mainly used for the purpose of controlling the wettability, permeability, and surface tension of the fabrication liquid to the fabrication powder. As the surfactant, conventionally known materials can be used. Anionic surfactant, nonionic surfactant, and amphoteric surfactant are suitably used.

Examples of the anionic surfactant include polyoxyethylene alkyl ether acetate, dodecylbenzene sulfonate, succinate ester sulfonate, laurylate, salt of polyoxyethylene alkyl ether sulfate, and the like.

Examples of the nonionic surfactant include polyoxyethylene alkyl ether, polyoxyethylene polyoxypropylene alkyl ether, polyoxyethylene alkyl ester, polyoxyethylene polyoxypropylene alkyl ester, polyoxyethylene sorbitan fatty acid ester, polyoxyethylene alkyl phenyl ether, polyoxyethylene alkyl amine, polyoxyethylene alkyl amide and the like.

Examples of the amphoteric surfactant include lauryl aminopropionate, lauryl dimethyl betaine, stearyl dimethyl betaine, lauryl dihydroxyethyl betaine, and the like.

Following specific examples of the amphoteric surfactant are preferably used. However, the amphoteric surfactant is not limited to the following examples. Examples of the amphoteric surfactant include lauryldimethylamine oxide, myristyldimethylamine oxide, stearyldimethylamine oxide, dihydroxyethyl lauryl amine oxide, polyoxyethylene coconut oil alkyl dimethylamine oxide, dimethyl alkyl (coco) betaine, dimethyl lauryl betaine, and the like.

The above-described surfactants can be obtained from surfactant manufacturers such as Nikko Chemicals, Nihon Emulsion, Nippon Shokubai, Toho Chemical, Kao, Adeka, Lion, Aoki Oil and Fat, and Sanyo Kasei. The acetylene glycol surfactant is preferably 2,4,7,9-tetramethyl-5-decyne-4, 7-diol, 3,6-dimethyl-4-octyne-3, 6-diol, 3,5-dimethyl-1-hexyn-3-ol may be used, but in particular, Surfynol 465, 104, or TG is preferable. Examples of the acetylene glycol surfactant include Surfynol 104, 82, 465, 485 or TG of Air Products and Chemicals, Inc. (U. S. A).

Examples of the fluorochemical surfactants include perfluoroalkyl sulfonate, perfluoroalkyl carboxylate, perfluoroalkyl phosphate ester, perfluoroalkyl ethylene oxide adduct, perfluoroalkyl betaine, perfluoroalkylamine oxide compound, a polyoxyalkylene ether polymer and sulfate ester salt having a perfluoroalkyl ether group in a side chain, and fluorinated aliphatic polymer ester.

Examples of commercially available fluorochemical surfactants include Surflon S-111, S-112, S-113, S121, S131, S132, S-141, S-145 (manufactured by Asahi Glass Co., Ltd.), Furlade FC-93, FC-95, FC-98, FC-129, FC-135, FC-170C, FC- 430, FC- 431, FC-4430 (manufactured by Sumitomo 3M Ltd.), FT-110, 250, 251, 400S (manufactured by Neos Company Ltd.), ZONYL FS-62, FSA, FSE, FSJ, FSP, TBS, UR, FSO, FSO-100, FSN N, FSN-100, FS-300, and FSK (manufactured by DuPont), polyfox PF-136A, PF-156A, PF-151N (manufactured by OMNOVA), etc.

The surfactant is not limited to the examples described above, and may be used alone, or a mixture of two or more thereof may be used. Even if the surfactant does not dissolve easily in the fabrication liquid alone, the surfactant may be solubilized by mixing into the fabrication liquid to obtain a stable liquid material in some cases.

The content of the surfactant relative to the fabrication liquid is preferably from 0.01% by mass to 10% by mass, more preferably from 0.1% by mass to 5% by mass, still more preferably from 0.5% by mass to 3% by mass. When the content is 0.01% by mass or more, the surfactant can prevent lowering of the permeability of the fabrication liquid into the fabrication powder. Thus, decrease in the strength of the three-dimensional object can be prevented. When the content is 10% by mass or less, the surfactant can appropriately control the permeability of the fabrication liquid to improve the dimensional accuracy of the obtained three-dimensional object.

### [Cross-linking Agent]

The cross-linking agent crosslinks with the resin coated on the surface of the fabrication powder. Thus, the cross-linking agent is effective to further increase the strength of the obtained three-dimensional object.
The cross-linking agent is not particularly limited as long as the cross-linking agent crosslinks with the resin. The cross-linking agent may be appropriately selected according to the purpose. Examples of the cross-linking agent include metal salts, metal complexes, polyvalent metal compounds such as organic zirconium compounds and organic titanium compounds, water-soluble organic cross-linking agents, chelating agents, blocked isocyanates, melamine compounds, and the like.

Examples of the cross-linking agent include organic zirconium compounds such as zirconium oxychloride, zirconium ammonium carbonate salt, zirconium oxychloride, zirconium oxynitrate, and zirconium ammonium lactate, titanium acylate, titanium alkoxide, titanium lactate, titanium diisopropoxy bis (Triethanolaminate), Soluble organic cross-linking agents such as ferric chloride, polyvalent metal compounds such as highly basic aluminum chloride, carbodiimide group-containing compounds, bisvinylsulfonic acid compounds, organic titanium chelates, chelating agents such as organic zirconia chelates, melamine compounds such as methylolated melamine, and the like. Metal salts which ionize divalent or higher valent cationic metal in water are also preferably used.

Specific examples of the metal salts include zirconium oxychloride octahydrate (tetravalent), aluminum hydroxide (trivalent), magnesium hydroxide (divalent), titanium lactate ammonium salt (tetravalent), basic aluminum acetate (trivalent), zirconium carbonate ammonium salt (tetravalent), titanium triethanolaminate (tetravalent), and the like are also preferably used. The materials described above may be used alone, or two or more of the materials may be used in combination.

Commercially available products may be used as the above-described cross-linking agent. Examples of the commercially available product include zirconium oxychloride octahydrate (zirconium oxychloride manufactured by Daiichi Kigenso Kagaku Kogyo Co., Ltd.), aluminum hydroxide (manufactured by Wako Pure Chemical Industries, Ltd.), magnesium hydroxide (manufactured by Wako Pure Chemical Industries, Ltd.), titanium lactate ammonium salt (Orgatics TC-300, TC-310, manufactured by Matsumoto Fine Chemical Co., Ltd.), zirconium lactate ammonium salt (Orgatics ZC-300, manufactured by Matsumoto Fine Chemical Co., Ltd.), basic aluminum acetate (Wako Pure Chemical Industries, Ltd.), bisvinylsulfone compound (VS-B (K-FJC) manufactured by Fuji Fine Chemicals Co., Ltd.), zirconium carbonate ammonium salt (Zircosol AC-7, AC-20, manufactured by Daiichi Kigenso Kagaku Kogyo Co., Ltd.),titanium triethanolaminate (Orgatics TC-400, manufactured by Matsumoto Fine Chemical Co., Ltd.), zirconium oxychloride (Zircosol ZC-20, manufactured by Daiichi Kigenso Kagaku Kogyo Co., Ltd.), zirconium oxynitrate (Zircosol ZN manufactured by Daiichi Kigenso Kagaku Kogyo Co.), glyoxylate (Safelink SPM-01, manufactured by Nippon Synthetic Chemical Industry Co., Ltd.), adipic acid dihydrazide (manufactured by Otsuka Chemical Co., Ltd.), and the like.

Particularly, a metal salt having a metal valence of two or more can improve the cross-linking strength and is preferable in terms of enhancing the strength of the resulting three-dimensional object.

As the ligand of the cationic metal, lactate ion is preferably used because the lactate ion is excellent in discharge stability of a fabrication liquid and storage stability over time. A cross-linking agent, the ligand of the cationic metal of which is carbonate ion (ammonium zirconium carbonate, for example) has a property in which a self-polymerization reaction occurs in an aqueous solution. Thus, the properties of the cross-linking agent are easy to change. Thus, from the viewpoint of discharge stability of the fabrication liquid, it is preferable to use a cross-linking agent, the ligand of the cationic metal of which is carbonate ion. Further, adding a chelating agent such as gluconic acid or triethanolamine can suppress the self-polymerization reaction of ammonium zirconium carbonate in the aqueous solution. Thus, the discharge stability of the fabrication liquid can be improved.

An amount of content of the cross-linking agent in the fabrication liquid is not particularly limited and may be appropriately selected depending on the purpose. For example, the preferable addition amount of the cross-linking agent to the resin contained in the fabrication powder is from 0.1% by mass to 50% by mass, and more preferably from 0.5% by mass to 30% by mass. If the amount of content of the cross-linking agent in the fabrication liquid is within an above-described range, the cross-linking agent can prevent an understrength the three-dimensional object. Further, the cross-linking agent can prevent thickening or gelation of the fabrication liquid and to prevent deterioration of liquid preservability and stability of viscosity.

### [Antifoaming agent]

The antifoaming agent is mainly used for preventing bubbling in the fabrication liquid. Generally used antifoaming agents may be used as the antifoaming agent. For example, silicone antifoaming agent, polyether antifoaming agent, fatty acid ester antifoaming agent and the like may be used, and the above-described antifoaming agents may be used in combination with one type, or in combination with two or more types.

As the antifoaming agent, a commercially available product may be used. Examples of the antifoaming agent include silicone antifoaming agents (KS508, KS531, KM72, KM85, etc. manufactured by Shin-Etsu Chemical Co., Ltd.), silicone antifoaming agent (Q2-3183A, SH5510, etc. manufactured by Dow Corning Toray Co., Ltd.), silicone antifoaming agent (SAG30, etc. manufactured by Nippon Unicar Co., Ltd.), antifoaming agent (ADEKA NATE series, etc. manufactured by Asahi Denka Co., Ltd.), and the like. An amount of content of the antifoaming agent to the fabrication liquid is preferably 3 % by mass or less, more preferably 0.5 % by mass or less. If the amount of content (additive amount) of the antifoaming agent is larger than the above-described range, solubility of the antifoaming agent to the fabrication liquid decreases, and separation and deposition of the antifoaming agent may occur in some cases.

### [pH Adjuster]

The pH adjuster is mainly used for adjusting pH of the fabrication liquid to a desired pH. As the pH adjuster, any material may be used as long as the pH of the fabrication liquid can be controlled.

To prevent corrosion and clogging of the nozzles 53 of the heads 52, it is preferable to use the pH adjuster having pH from 5 (slightly acidic) to 12 (basic), more preferably from 8 to 10 (weakly basic) when an inkjet system is used as a discharging device of the fabrication apparatus 601 of the three-dimensional object. The pH of the fabrication liquid can be arbitrarily adjusted by adding the pH adjuster to the fabrication liquid. Some of the cross-linking agents may also function as the pH adjuster.

Examples of the pH adjuster include amines, alkali metal hydroxide, quaternary compound hydroxide, alkali metal carbonate, inorganic acid and organic acid when adjusted to be acidic when adjusting the fabrication liquid to basic. Specific examples of the pH adjuster include amines such as diethanolamine and triethanolamine, hydroxides of alkali metal elements such as lithium hydroxide, sodium hydroxide and potassium hydroxide, alkali metal carbonates such as ammonium hydroxide, quaternary ammonium hydroxide, quaternary phosphonium hydroxide, lithium carbonate, sodium carbonate, potassium carbonate, and the like.

Further, inorganic acids such as hydrochloric acid, sulfuric acid, nitric acid, phosphoric acid, boric acid and the like, salts formed with monovalent weak cations such as ammonium sulfate and ammonium phosphate, organic acids such as acetic acid, oxalic acid, lactic acid, salicylic acid, benzoic acid, glucuronic acid, ascorbic acid, alginic acid, cysteine, oxalic acid, fumaric acid, maleic acid, malonic acid, lysine, malic acid, citric acid, glycine, glutamic acid, succinic acid, tartaric acid, phthalic acid, pyrrolidonecarboxylic acid, pyrone carboxylic acid, pyrrole carboxylic acid, furancarboxylic acid, pyridine carboxylic acid, coumaric acid, thiophene carboxylic acid, nicotinic acid, carborane acid, or derivatives of these compounds. The pH adjuster is not limited to the above compounds.

In accordance with the characteristics corresponding to a pH fluctuation of the fabrication liquid, the pH adjuster having the optimal temporal dissociation constant pKa are appropriately used. One type of the pH adjuster may be used alone, or two or more types of the pH adjuster may be used in combination, or a buffer agent may be used in combination.

### [Antiseptic and Antifungal Agent]

The antiseptic and antifungal agent is mainly used for antiseptic and antifungal of the fabrication liquids. When the fabrication liquid is preserved, microorganisms proliferate that cause a decrease in the pH or sedimentation of the components. The antiseptic and antifungal agent can prevent the above-described problem.
Examples of the antiseptic and antifungal agents include sodium benzoate, sodium dehydroacetate, potassium sorbitanate, sodium sorbate, thiabendazole, benzimidazole, 2-pyridinethiol-1-oxide sodium, pentachlorophenol sodium, and the like.

### [Adjustment Method for Fabrication Liquid]

A method for preparing the fabrication liquid is not particularly limited and may be appropriately selected depending on the purpose. For example, there is a method of adding the other components to a liquid component such as water or a water-soluble solvent as necessary and mixing and stirring the added components and the liquid component.

### [Example of Action of Fabrication Powder and Fabrication Liquid]

Using the fabrication powder and the fabrication liquid as described above can coat the particles of the base material and dissolve and can dissolve and crosslink the water-soluble organic material adhered to the particles of the base material with the water containing cross-linking agent. When the water containing cross-linking agent is added to the water-soluble organic material, the water-soluble organic material dissolves, and crosslinks by the action of the cross-linking agent contained in the water containing cross-linking agent. Thus, the present embodiment forms a thin layer (powder layer 31) and discharges water containing the cross-linking agent onto the powder layer 31. Thus, dissolved water-soluble organic material cross-links, and bonds and cures the powder layer 31 to form a fabrication layer 30.

### [Permeation Behavior of Fabrication Liquid]

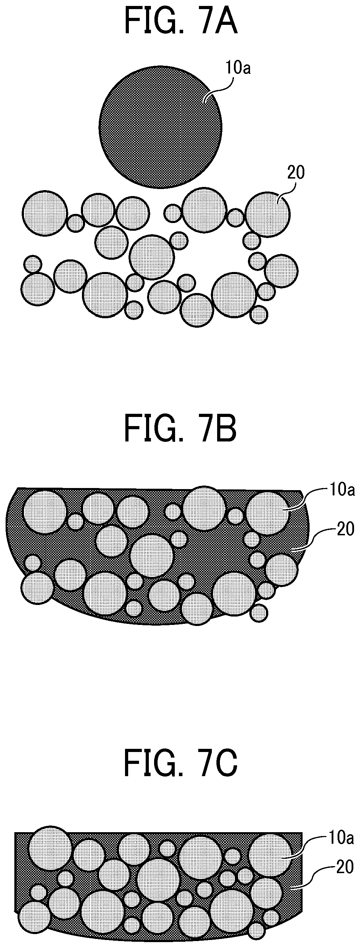

Next, the permeation behavior of the fabrication liquid is described with reference to FIGS. 7A through 7C. FIGS. 7A through 7C are enlarged schematic cross-sectional views of the droplets 10a of the fabrication liquid 10 and the fabrication powder 20.

The fabrication powder 20 transported and supplied from the supply chamber 21 to the fabrication chamber 22 by the flattening roller 12 is deposited in the fabrication chamber 22 at a density close to the bulk density depending on the material and particle size distribution of the fabrication powder 20. When the droplets 10a discharged from the head 52 penetrate in the X-direction, Y-direction, and Z-direction, a liquid cross-linking force acts between the particles of the fabrication powder 20 deposited in the fabrication chamber 22. Thus, the air present between the fabrication powder 20 is pushed out so that the distance between particles of the fabrication powder 20 is shortened. A density of the fabrication powder 20 in a part in which the droplets 10a are applied increases.

The above-described characteristic is schematically illustrated in FIGS. 7A through 7C. FIG. 7A is a cross-sectional view of the fabrication liquid 10 and the fabrication powder 20 when the droplets 10a of the fabrication liquid 10 are discharged onto the fabrication powder 20 of the powder layer 31. FIG. 7B is a cross-sectional view of the fabrication liquid 10 and the fabrication powder 20 when the droplets 10a of the fabrication liquid 10 have landed on the powder layer 31. As illustrated in FIG. 7B, the fabrication liquid 10 permeates the fabrication powder 20 such that a shape of the fabrication liquid 10 permeated into the fabrication powder 20 to be close to an ideal hemisphere or an elliptical hemisphere due to a surface tension of the fabrication liquid 10.

When the fabrication liquid 10 is discharged from the head 52 by an inkjet method and when a surface tension of the fabrication liquid 10 is from 20 to 40 mN/m, for example, the lower the surface tension the fabrication liquid 10, the easier the fabrication liquid 10 to wet and diffuse to the fabrication powder 20. Therefore, the shape of the fabrication liquid 10 tends to become a hemisphere or elliptical hemisphere. Then, as illustrated in FIG. 7C, with progress of penetration of the droplets 10a of the fabrication liquid 10 into the fabrication powder 20, the distance between the fabrication powder 20 decreases by the liquid cross-linking force, and the fabrication powder 20 aggregates.

The X-direction and Y-direction indicate a surface direction of the powder layer 31, and the Z-direction indicates a direction perpendicular to the surface direction.

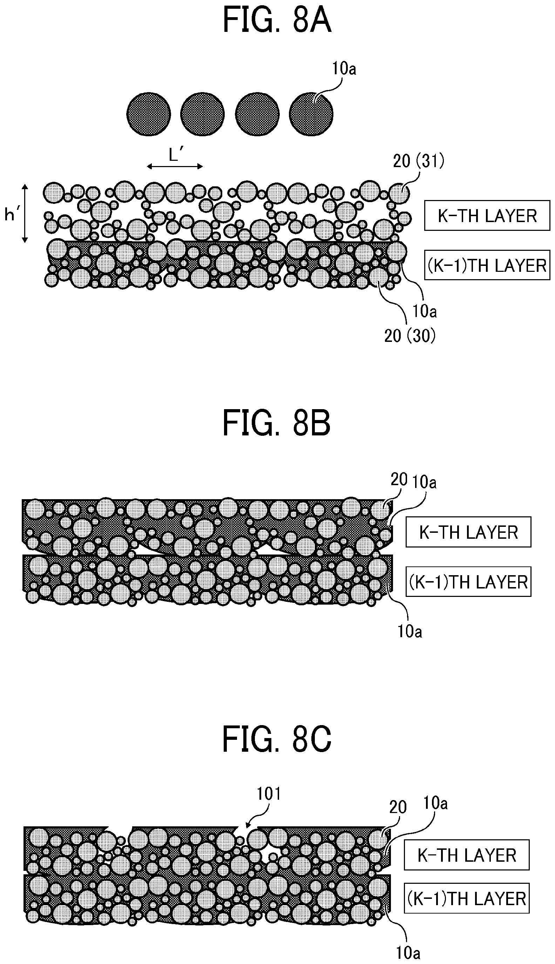

Next, a permeation behavior of the fabrication liquid 10 in a comparative example is illustrated with reference to FIGS. 8A through 8C. FIGS. 8A through 8C are schematic cross-sectional view of the fabrication liquid 10 and the fabrication powder 20 illustrating a fabrication process of K-th layer of the powder layer 31. FIG. 8A illustrates a state in which the droplets 10a of the fabrication liquid 10 are landed onto the powder layer 31.

FIG. 8B illustrates a state in which the droplets 10a of the fabrication liquid 10 permeates the fabrication powder 20 of the powder layer 31. FIG. 8C illustrates a state after the droplets 10a of the fabrication liquid 10 permeated into the fabrication powder 20. The three-dimensional object (fabrication layer 30) of a (K-1) th layer, the fabrication process of which has already been completed in the (K-1) th layer, exists under the fabrication powder 20 in the powder layer 31 laminated with the thickness h'. The fabrication layer 30 is also sometimes referred to as a lower layer of the powder layer 31.

As illustrated in FIG. 8A, the head 52 discharges the droplets 10a of the fabrication liquid 10 onto a K-th layer of the powder layer 31 at a predetermined resolution. Then, the fabrication liquid 10 permeates the fabrication powder in the X-direction, the Y-direction, and the Z-direction while aggregating the fabrication powder 20 by the liquid bridging force.

In the comparative example in FIGS. 8A though 8C, the head 52 discharges the droplets 10a of the fabrication liquid 10 such that adjacent dots are overlapped to prevent defects such as void to be formed inside the three-dimensional object. Therefore, the droplets 10a of the fabrication liquid 10 discharged onto the fabrication powder 20 immediately contact and coalesce adjacent droplets 10a of the fabrication liquid 10 in the X-direction and the Y-direction.

As illustrated in FIG. 8A, a relation between a thickness h' of the powder layer 31 and a center-to-center distance L' of the nearest droplets 10a of the fabrication liquid 10 landed on the powder layer 31 becomes h' ≥ L'. The center-to-center distance L' is also referred to as "a distance between nearest dots". Therefore, adjacent dots contact and coalesce before the permeation of the droplets 10a of the fabrication liquid 10 into the (K-1) th layer of the powder layer 31 progresses.

However, if adjacent dots contact and coalesce immediately after landing of the droplets 10a on the fabrication layer 30, it is equivalent to form a film of the fabrication liquid 10 on a surface of the powder layer 31 having a shape of a portion where the fabrication liquid 10 is applied according to the K-th layer of slice data with a high frequency such as inkjet method. Then, the air present between the fabrication powder 20 cannot escape and eventually remains as a large void in the three-dimensional object or becomes bubbles that penetrates the fabrication layer 101 (see FIG. 8C).

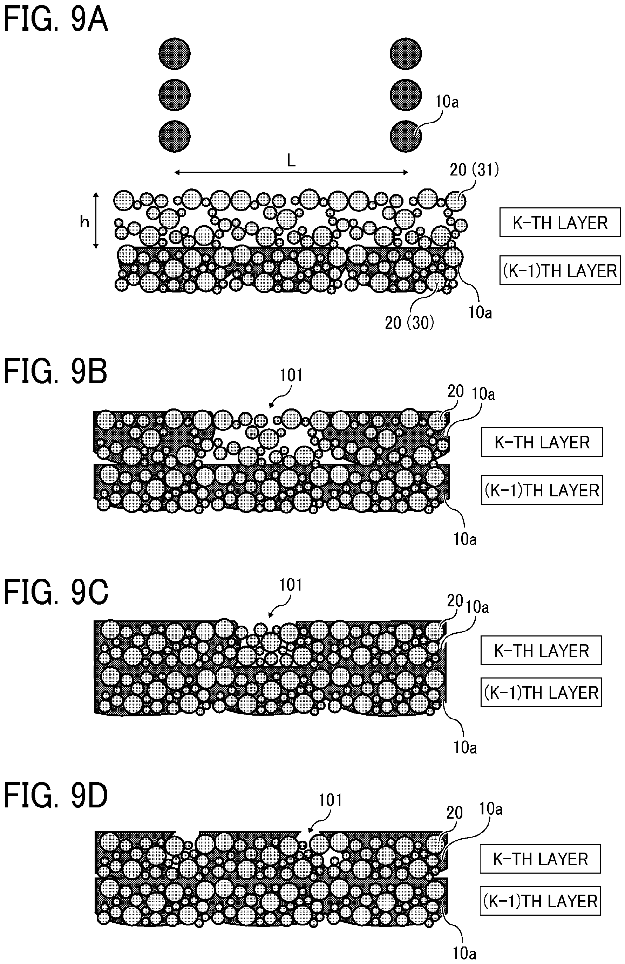

Next, the permeation behavior of the fabrication liquid 10 is described with reference to FIGS. 9A through 9D. FIGS. 9A through 9D are schematic cross-sectional view of the fabrication liquid 10 and the fabrication powder 20 illustrating a fabrication process of K-th layer of the powder layer 31 in the present embodiment. FIG. 9A illustrates a state in which the droplets 10a of the fabrication liquid 10 are landed onto the powder layer 31. FIGS. 9B through 9D illustrate a state in which the droplets 10a of the fabrication liquid 10 permeates the fabrication powder 20 of the powder layer 31.

As illustrated in FIG. 9A, the three-dimensional object (fabrication layer 30) of a (K-1) th layer, the fabrication process of which has already been completed, exists under the fabrication powder 20 in the powder layer 31 laminated with the thickness h. The fabrication layer 30 is also sometimes referred to as a lower layer of the powder layer 31. As illustrated in FIG. 9A, the head 52 discharges the droplets 10a of the fabrication liquid 10 onto the powder layer 31 of the K-th layer at a predetermined resolution. Then, the fabrication liquid 10 permeates the fabrication powder 20 in the X-direction, the Y-direction, and the Z-direction while aggregating the fabrication powder 20 by the liquid bridging force.

The head 52 of the present embodiment discharges the droplets 10a of the fabrication liquid 10 so that a relation between a thickness h of the powder layer 31 and a center-to-center distance L of the nearest droplets 10a of the fabrication liquid 10 landed on the powder layer 31 becomes h < L. The center-to-center distance L is also referred to as "a distance between nearest dots".

The distance L between nearest dots of the present embodiment illustrated in FIG. 9A is larger than the distance L' between nearest dots of the comparative example in FIG. 8A. That is, the present embodiment satisfies the relation of h < L as illustrated in FIG. 9 whereas the comparative example satisfies the relation of h' ≥ L' as illustrated in FIGS. 8A. As a result, when the droplets 10a discharged from the head 52 permeates the K-th layer of the powder layer 31 in the X-direction, Y-direction, and the Z-direction, the droplets 10a first comes into contact with (intersects) the droplets 10a in the (K-1) th layer, and then comes into contact with (intersects) the adjacent droplets 10a of the fabrication liquid 10 in the K-th layer.

Due to such permeation behavior, as illustrated in FIGS. 9B through 9D, the air extruded by the droplets 10a can escape from a space of the fabrication powder 20 between adjacent dots until the moment in which the adjacent dots intersect. That is, the droplets 10a of the fabrication liquid 10 first permeate sufficiently in a lamination direction of the powder layer 31 (Z-direction) and then permeate in a horizontal direction (X-direction and Y-direction) to come into contact with the adjacent droplets 10a of the fabrication liquid 10. When the adjacent dots overlap, the air present between the fabrication powder 20 can escape to the atmosphere, and a space between the fabrication powder 20 can be filled with the fabrication liquid 10.

Thus, the present embodiment can prevent intersection of the adjacent dots in a plane direction (surface direction) of the powder layer 31 before the droplets 10a of the fabrication liquid 10 permeate and reach to a lower layer such as the (K-1) th layer, for example. Then, the fabrication liquid 10 is further applied to an identical dot position as illustrated in FIG. 9A. Thus, the air present between the fabrication powder 20 can escape from the space in the fabrication powder 20, in which the droplets 10a of the fabrication liquid 10 is not permeated, until the moment when the adjacent dots (droplets 10a of the fabrication liquid 10) intersect in the plane direction.

When the heads 52 discharge the droplets 10a onto the K-th layer of the powder layer 31, a fabrication process of the (K-1) th layer is finished. Thus, the (K-1) th layer is the fabrication layer that is a part of the three-dimensional object. However, the (K-1) th layer is sometimes referred to as "a lower layer of the powder layer" instead of the fabrication layer 30.

The droplets 10a of the fabrication liquid 10 discharged onto the powder layer 31 permeate the powder layer 31 with elapse of time. Thus, the droplets 10a do not come into contact with the adjacent droplets 10a in the plane direction (X-direction and Y-direction) when the droplets 10a come into contact with the fabrication liquid 10 in the lower layer of the powder layer 31 in Z-direction. In other words, the droplets 10a discharged from the head 52 first intersect the fabrication liquid 10 in the Z-direction and then intersect with the fabrication liquid 10 in the X-direction and Y-direction. Thus, the droplets 10a contact the lower layer of the powder layer 31 before the nearest two of the droplets 10a contact with each other.

When the droplets 10a discharged from the head 52 to the K-th layer of the powder layer 31 permeate the powder layer 31 in the X-direction, the Y-direction, and the Z-direction and reach the surface of the lower layer ((K-1) th layer) in the Z-direction, the droplets 10a do not permeate the interior of the fabrication layer 30 in the Z-direction but permeate along the surface of the fabrication layer 30 in the plane direction (X-direction and Y-direction). As a result, the fabrication liquid 10 discharged from the head 52 permeates the surface of the lower layer ((K-1) th layer) of the fabrication layer 30 in the X-direction and the Y-direction. Thus, the present embodiment promotes a bubble (air) remained in the fabrication powder 20 to escape from the powder layer 31.

The relation between the thickness h and the distance L is not limited as long as the distance L is larger than the thickness h (h < L). The larger the difference between the values of the thickness h and the distance L, the longer the time it takes for adjacent dots to intersect (overlap). Thus, the voids (bubble, air) are less likely to remain in the powder layer 31.

The upper limit of the distance L varies depending on properties of the fabrication powder 20 and the fabrication liquid 10 and the like. For example, the upper limit of distance L is preferably 8h (eight times of the thickness h) or less, and more preferably 4h (four times of the thickness h) or less. Thus, the distance L and the thickness h preferably satisfy a relation of 8h ≥ L > h, and more preferably satisfy a relation of 4h ≥ L > h.

As described above, the present embodiment can obtain the three-dimensional object in which voids and unevenness of voids is reduced. There are several methods of observing the obtained three-dimensional object. For example, there is a method of determining a distribution of void with a difference in contrast by a transmitted X-ray observation. When there is almost no difference in contrast or when there is a regularly existed difference in contrast even when there is difference in contrast, it can be said that the present embodiment suppresses the voids in the three-dimensional object and unevenness of the voids.

In the above embodiment, explanation is made using the thickness h and the distance L, but it is important that the droplets 10a discharged from the head 52 permeates through the powder layer 31 and intersects (contact) the adjacent droplets 10a after contacting the lower layer ((K-1) th layer) of the powder layer 31. Thus, the present embodiment can obtain the fabrication product in which voids and an unevenness of voids is suppressed.

A liquid amount of the droplets 10a discharged from the head 52 varies depending on the fabrication powder 20, the fabrication liquid 10, the three-dimensional object to be fabricated, and the like, and can be appropriately changed. For example, following method may be applied to determine the amount of liquid of the droplets 10a. First, a volume of a fabrication section is calculated from the resolution of the three-dimensional object and the thickness h of the powder layer. The fabrication section serves as a unit for a fabrication process of the three-dimensional object. Then, the volume of the fabrication section excluding a volume of the fabrication powder 20 in the fabrication section is calculated from the volume of the fabrication section as the required liquid amount of the fabrication liquid 10. Then, the liquid amount of droplets 10a discharged from the head 52 at one time in a discharge process is set to be equal to or less than a required liquid amount of the fabrication liquid 10.

Thus, the present embodiment calculates a volume of a fabrication section for fabricating the three-dimensional object from a resolution of the three-dimensional object and the thickness of the powder layer 31 and calculates a volume of a space excluding a volume of the fabrication powder in the fabrication section from the volume of the fabrication section as a required liquid amount of the fabrication liquid 10. The amount of droplets 10a of the fabrication liquid 10 discharged at one time at the discharging is equal to or less than the required liquid amount.

Thus, the present embodiment can prevent the droplets 10a discharged from the head 52 to permeate in the X-direction and the Y-direction in the powder layer 31 more than necessary. Thus, the present embodiment can secure time for the droplets 10a to permeate in the Z-direction and reaches the lower layer ((K-1) th layer) of the powder layer 31.

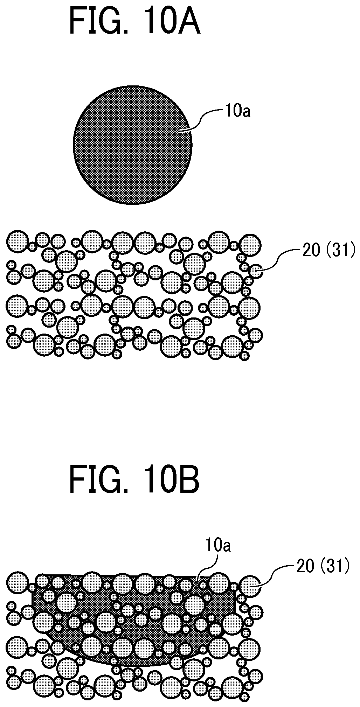

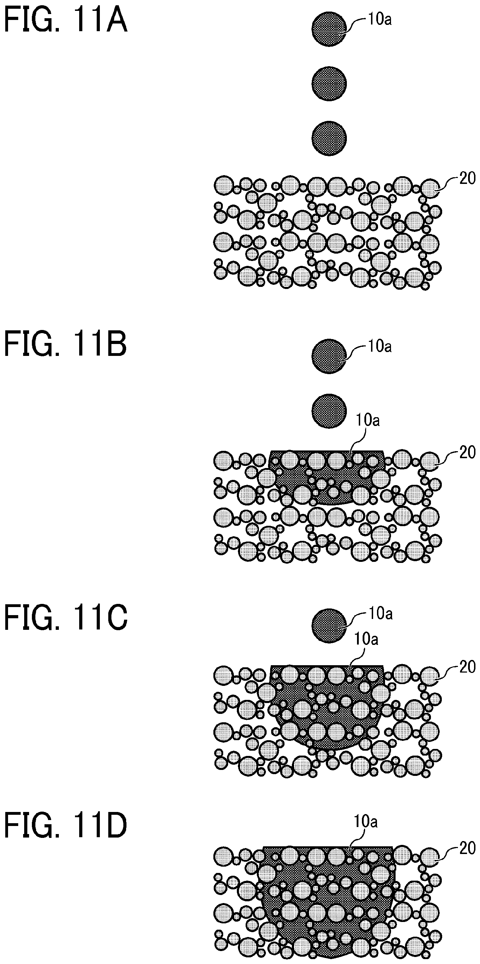

Next, the penetration behavior of the fabrication liquid 10 is described in detail with reference to FIGS. 10A and 10B, and FIGS. 11A through 11D. FIGS. 10A and 10B illustrate an example in which the droplets 10a are discharged once on the surface of the powder layer 31. FIG. 11A through 11D illustrate an example in which a plurality of the droplets 10a is discharged to an identical position on the surface of the powder layer 31. In other words, the droplets 10a are discharged to the identical position for a plurality of times.

As illustrated in FIGS. 10A and 10B, when the droplets 10a are discharged once, the droplets 10a permeate in the X-direction, the Y-direction, and the Z-direction as illustrated in FIGS. 7A through 7C.

Conversely, when the droplets 10a are discharged to the identical position on the surface of the powder layer 31, the droplets 10a exhibits a behavior as illustrated in FIGS. 11A through 11D. The identical position on the surface of the powder layer 31 is also referred to as "one section of a fabrication image" or "one pixel that forms image".

Specifically, when the droplets 10a is discharged to the identical position, the droplets 10a easily permeates in the Z-direction (depth direction) since an initial velocity is added to a discharge velocity of the droplets 10a discharged from the head 52. Thus, compared with the example illustrated in FIGS. 10A and 10B, the droplets 10a easily permeates in the Z-direction (thickness direction, lamination direction). Thus, the voids (air, bubble) in a vicinity of the fabrication layer 30 (in a vicinity of the lower layer in the powder layer 31 are easier to escape to the atmosphere. Thus, the present embodiment illustrated in FIGS. 11A through 11D can improve the effect of preventing a generation of the voids and the unevenness of the voids in the three-dimensional object.

The number of times of discharging the droplets 10a to the identical position may be appropriately changed. However, the effect as described-above can be further enhanced by increasing the number of times of discharging the droplets 10a.

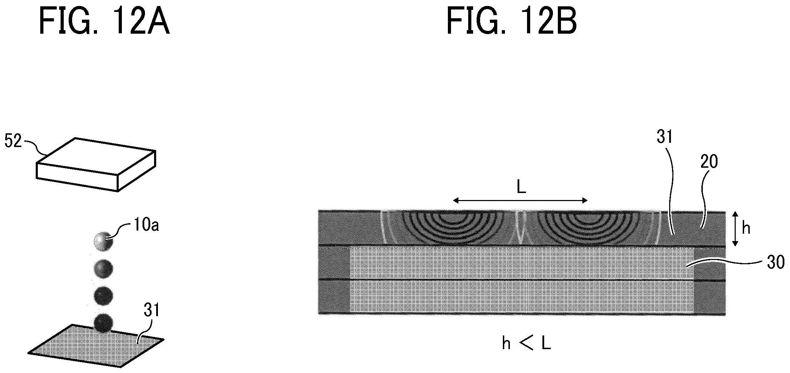

Next, another embodiment of the present disclosure is described with reference to FIGS. 12A and 12B. As illustrated in FIG. 12A, the head 52 of the present embodiment discharges the droplets 10a to the identical position in the powder layer 31 to perform a fabrication process of the three-dimensional object.

FIG. 12A is a schematic perspective view of the head 52 and the powder layer 31 when the head 52 discharges the droplets 10a onto the surface of the powder layer 31. FIG. 12B is a cross-sectional view of the powder layer 31 in which droplets 10 permeates through the powder layer 31.

As illustrated in FIGS. 12A and 12B, the thickness h of the powder layer 31 and the center-to-center distance L of the droplets 10a between the nearest droplets 10a landed on the powder layer 31 are determined to satisfy the relation of h > L as similarly to the embodiment as illustrated in FIGS. 9A through 9D.

The total amount of the fabrication liquid 10 discharged to one section of the fabrication image can be determined by the thickness h and the distance L as described above. An amount of fabrication liquid 10 applied per unit volume of the three-dimensional object is preferably to be constant.

For example, it is assumed that the fabrication process is performed with the following pattern A and pattern B.
Pattern A: L = a [µm], h = b [µm], a > b
Pattern B: L = 2a [µm], h = b [µm], a > b

At this time, the unit volume (voxel) constituting the three-dimensional object can be determined as follows.
Pattern A: a²b[(µm)³]
Pattern B: 4a²b[(µm)³]

Therefore, when the total amount of fabrication liquid 10 to be discharged in the pattern A is V [pL], it is necessary to discharge the fabrication liquid 10 of 4V [pL] to one section of the fabrication image in the pattern B.

The liquid amount v of one drop discharged at the time of fabrication can be appropriately changed when the total amount V of the fabrication liquid 10 to be discharged to one section of the fabrication image determined by the distance L and the thickness h is divided into "n" numbers of droplets 10a to be discharged. It is also possible to equally divide the total amount V of the fabrication liquid 10 by the number (n) of droplets 10a to satisfy a relation of v = V / n. Further, it does not have to evenly divide the total amount of the fabrication liquid 10. For example, the total amount of the fabrication liquid 10 may be divided to satisfy a relation of v₁ + v₂ +... + vₙ₋₁ + vₙ = V. In this case, it is possible to reduce a number of divisional discharge by discharging large droplets only with a droplet v₁ and discharging small droplets for the droplets 10a after a droplet v₂ (from droplets v₂ to vₙ).

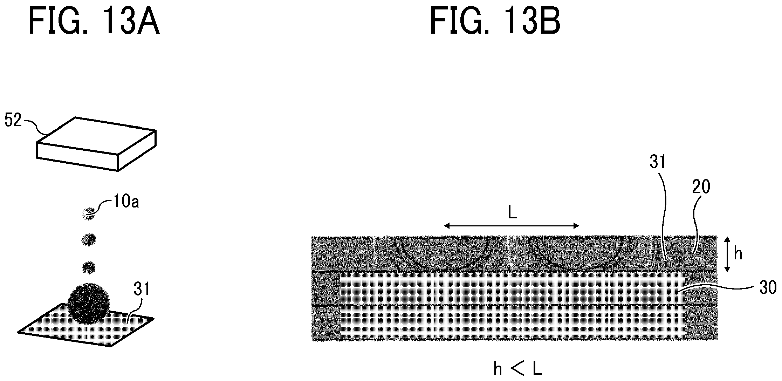

FIGS. 12A and 12B illustrate an example in which the total amount V of fabrication liquid 10 is equally divided. Further, FIGS. 13A and 13B illustrate an example in which the total amount V of fabrication liquid 10 is not equally divided such as only the droplet v₁ is discharged with large droplet, and the droplets 10a after the droplet v₂ (from droplets v₂ to vₙ) are discharged with small droplets. As illustrated in FIG. 12B and FIG. 13B, a behavior of permeation of the droplets 10a in the powder layer 31 is different between the embodiment in FIG. 12B and the embodiment in FIG. 13B. However, both embodiments have the same effect of preventing the voids and the unevenness of voids of the three-dimensional object.

In this way, same liquid amount may be discharged for all n-numbers of the droplets 10a, or different liquid amount may be discharged for n-numbers of the droplets 10a when n-numbers of droplets 10a are discharged to the identical position. It is not particularly limited how to change the amount of the fabrication liquid 10 when different amount of fabrication liquid 10 is discharged (when the total amount V of fabrication liquid 10 is not equally divided). For example, only the first droplets 10a may be discharged with large droplet as described-above. Further, the liquid amount of the fabrication liquid 10 before the adjacent dots intersect (contact) may be made different from the liquid amount of the fabrication liquid 10 after the adjacent dots intersect (contact).

In this case, it is assumed that droplets 10a discharged to the identical position is respectively referred to as a first, second, K-th, and N-th. Further, it is assumed that the K-th droplets 10a permeates the powder layer 31 and contacts (intersects) the fabrication liquid 10 in the lower layer of the powder layer 31 (fabrication layer 30). The liquid amount of the droplets 10a at the 1st to (K-1) th and the liquid amount of the droplets 10a at the K-th to the N-th may be different (provided that K is an integer from 1 to n, and n is at least 2). As a result, the present embodiment can adjust a fabrication speed and a fabrication time.

Further, in this case, it is preferable that the liquid amount of the droplets 10a in the first to (K-1) th is larger than the liquid amount of the droplets 10a in the K-th to N-th. As a result, the total number of droplets 10a can be reduced. Thus, the fabrication speed can be increased, and the fabrication time can be further shortened.

Thus, the discharging discharges first to N-th droplets 10a onto the identical position on the surface of the powder layer 31, and the discharging discharges a K-th droplet 10a after the first droplet and before the N-th droplet. The droplets 10a permeates the powder layer 31 and contacts the droplets 10a in the lower layer (fabrication layer 30) of the powder layer 31 when the K-th droplet is discharged onto the surface of the powder layer 31. The K-th to N-th droplets 10a with a liquid amount different from a liquid amount of first to (K-1) th droplets 10a. K is integer from 1 to n, and n is integer equal to or larger than two.

Further, when n-numbers of droplets 10a are discharged to the identical position, same frequency may be set for all n-numbers of droplets 10a, or different frequencies may be set for n-numbers of droplets 10a, respectively.

In the latter case, the droplets 10a discharged to the identical position are respectively referred to as first, second, ..., K-th, ..., and N-th droplets 10a. When the K-th droplet 10a permeates through the powder layer 31 and contacts (intersects) the fabrication liquid 10 in the lower layer of the powder layer 31 (fabrication layer 30), it is preferable that a frequency for discharging K to N-th droplets 10a is higher than a frequency for discharging first to (K-1) th droplets 10a. Here, K is an integer from one to N, and N is integer of from two or more.

Thus, the discharging process discharges first to N-th droplets (10a) onto the identical position on the surface of the powder layer (31), and a K-th droplet 10a is discharged after the first droplet and before the N-th droplet, and the droplets 10a permeates the powder layer 31 and contacts the droplets 10a in the lower layer of the powder layer 31 when the K-th droplet is discharged onto the surface of the powder layer 31. The K-th to N-th droplets 10a are discharged with a frequency higher than a frequency for discharging first to (K-1) th droplets (10a). K is integer from 1 to n, and n is integer equal to or larger than two.

In this way, the frequency for discharging the first to (K-1) th droplets 10a is higher than the frequency for discharging the K-th to N-th droplets 10a. Thus, the operation speed of a discharge mechanism for discharging the K-th to N-th droplets 10a can be increased. Thus, the present embodiment can increase an overall fabrication speed and shorten the fabrication time.

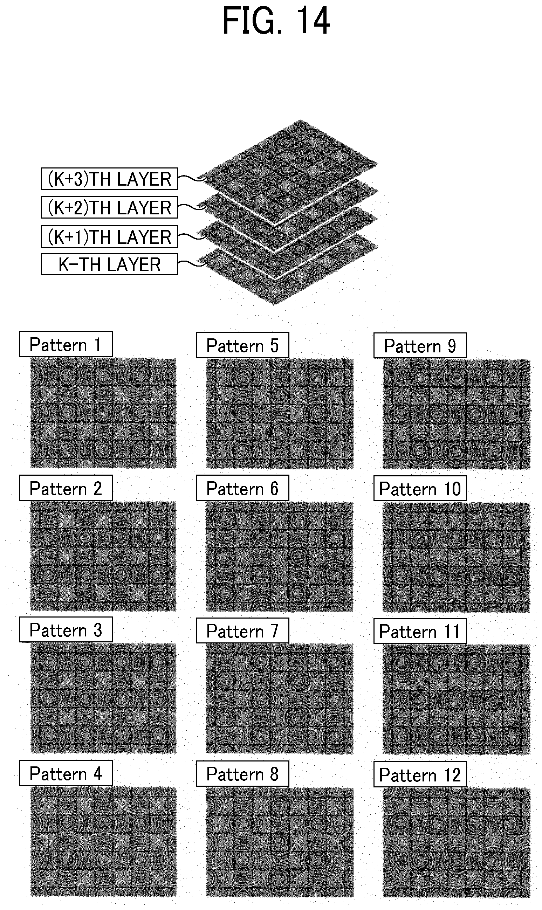

Next, still another embodiment of the present disclosure is described with reference to FIG. 14. In the present embodiment, a discharge position of the droplets 10a is shifted between powder layers 31.

For example, the discharge position in one layer ((K+1) th layer, for example) of the powder layer 31 is shifted from the discharge position in another layer (K-th layer, for example) immediately below the one layer ((K+1) th layer, for example).

FIG. 14 is a specific perspective and plan views of examples of fabrication patterns in which a pattern of powder layer 31 applied with the fabrication liquid 10 is illustrated. The fabrication patterns 1 to 12 illustrated in FIG. 14 are preferable examples of the fabrication pattern in the present embodiment. However, the present disclosure is not limited to the fabrication patterns 1 to 12, and other patterns may also be used.

For example, for the K-th to (K+3) th layers in the three-dimensional object, all the K-th to (K+3) th layers may be formed by using one type of fabrication pattern. However, the fabrication pattern may be changed for each of the K-th to (K+3) th layers. The fabrication pattern to be used is not particularly limited. However, it is more effective to periodically use a plurality of fabrication patterns.
Examples of combinations of the plurality of fabrication patterns include, for example, Patterns 1 to 4, Patterns 5 to 8, and Patterns 9 to 12., The present disclosure is not limited to the embodiments described-above and can be appropriately changed.

If the three-dimensional object is fabricated by repeating a step of forming the powder layer 31 with the fabrication powder 20 and a step of discharging the droplets 10a of the fabrication liquid 10 onto the powder layer 31, small voids that cannot be eliminated in the powder layer 31 may be continuously aligned (formed) in the Z-direction (thickness direction).

Conversely, the present embodiment shifts the discharge positions of the droplets 10a for each powder layer 31 by using the plurality of fabrication patterns. Thus, even if there are small voids that cannot be eliminated in the powder layer 31, the present embodiment can discontinuously align the fabrication layers 30 in the Z-direction (thickness direction) by using a plurality of fabrication patterns to shift the discharge positions. Thus, the present embodiment can further reduce a difference in a density of the three-dimensional object by dispersing the voids, which may remain in the three-dimensional object, in the Z-direction.

It is more preferable to shift the discharge position for every powder layers 31. That is, the present embodiment shifts the discharge position of a target powder layer 31 (K-th layer) from the discharge position of the powder layer 31 ((K-1) th layer) immediately below the target powder layer 31 (K-th layer) for every powder layers 31. The above-described effect can be obtained by shifting the discharge position at least one layer of the plurality of powder layers 31.

### [Examples]

Hereinafter, the present disclosure is described in detail with reference to Examples. However, the present disclosure is not limited to the following Examples.

### [Example 1]

0.25% by mass of an organic external additives (non-crosslinked polyacrylic resin) having an average particle size of 150 nm were added to core particles (SUS 316L) having an average particle diameter of 8 µm coated with a polymer thin film (polyvinyl alcohol) having a film thickness of 100 nm. The organic external additives were dispersedly adhered on the surface of the core particles to obtain a fabrication powder 20 (referred to as "resin-coated SUS 316L").

As the fabrication liquid 10, a fabrication liquid 10 containing water as a main material and containing a cross-linking agent (zirconium carbonate ammonium salt) was used. Water was set to 72 mass % in the fabrication liquid 10.

A flat plate having a length of 10 mm, a width of 10 mm, and a height of 3 mm was prepared by the fabrication method and fabrication apparatus as illustrated in FIGS. 6A through 6D using the fabrication powder 20 and the fabrication liquid 10 as described above. As illustrated in Table 1, following fabrication condition is applied.

A thickness h (laminating pitch Δt1) of the powder layer 31 was set to 42 µm, and the center-to-center distance L (distance L between adjacent dots) between the nearest droplets 10a landed on the powder layer 31 was set to 84 µm. In the present embodiment, the relation between the thickness h and the distance L between the nearest dots is h < L. Further, eight droplets 10a each having a liquid amount of 20 pL were discharged at the identical position at a frequency of 5 kHz (divisional discharge numbers of eight times). The obtained fabrication pattern is illustrated as Pattern 1 in FIG. 14.

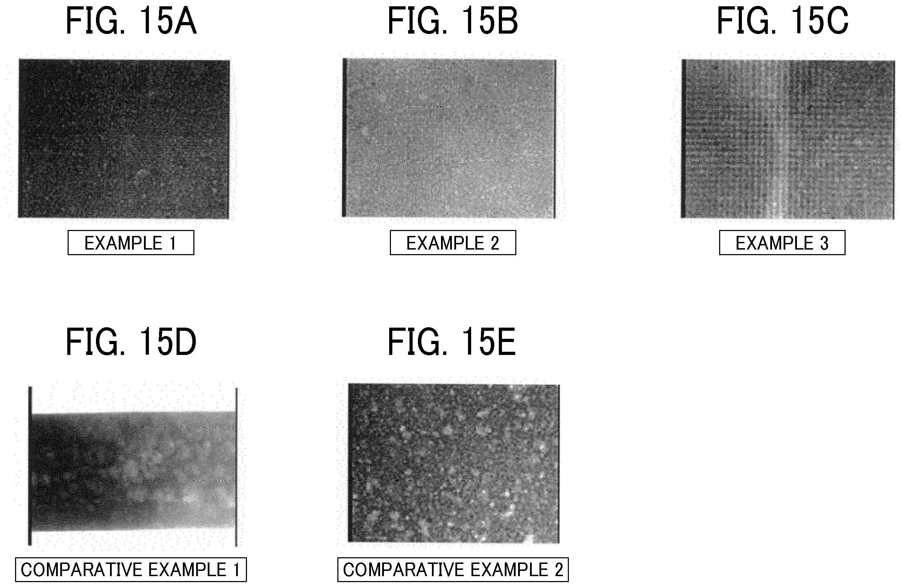

After the flat plate obtained as described-above was sufficiently dried, a surplus fabrication powder 20 was removed to obtain a three-dimensional object for evaluation. An internal distribution of voids of the three-dimensional object for evaluation was observed by observing the difference in contrast by transmission X-ray observation. FIGS. 15A through 15E illustrate a part of the images.

### [Examples 2-8 and Comparative Examples 1-3]

A three-dimensional object for evaluation was fabricated in the same manner as in Example 1 except that the fabrication conditions were changed as illustrated in Table 1.
Note that "Patterns 1 to 4" in a fabrication pattern of Example 6 in Table 1 indicates that the three-dimensional object was fabricated by periodically using the Patterns 1 to 4 in FIG. 14. Similarly, "Patterns 1 to 12" in a fabrication pattern of Example 7 in Table 1 indicates that the three-dimensional object was fabricated by periodically using the Patterns 1 to 12 in FIG. 14.

In Example 8, instead of the fabrication powder 20 in Example 1 ("resin-coated SUS 316L"), a fabrication powder (referred to as "resin-added SUS 316L") was used. The resin-added SUS 316L was obtained by adding 0.7 % by mass of a polymer resin (Polyvinyl alcohol) having a particle size of 5 µm to 100 µm to core particles (SUS 316L) having an average particle diameter of 8 µm.

Although Comparative Example 3 is not illustrated in Table 1, the fabrication condition as same as Example 1 is applied except that the relation between the thickness h and the distance L is h > L.

**[Table 1]**

| | TYPE OF POWDER | LAMIN ATION PITCH | DISTANCE L | NUMBER OF DISCHARGE | FREQUENCY | FABRICATION PATTERN |
|---|---|---|---|---|---|---|
| EXAMPLE 1 | RESIN COATING SUS316L | 42 µm | 84 µm | 8 times (20 pL × 8) | 5 kHz | Pattern 1 only |
| EXAMPLE 2 | RESIN | 42 µm | 84 µm | 16 times | 5 kHz | Pattern 1 only |
| | COATING SUS316L | | | (10 pL × 16) | | |
| EXAMPLE 3 | RESIN COATING SUS316L | 42 µm | 169 µm | 8 times (40 pL × 8) | 5 kHz | Pattern 1 only |
| EXAMPLE 4 | RESIN COATING SUS316L | 42 µm | 169 µm | 5 times (80 pL × 3) (40 pL × 2) | 5 kHz | Pattern 1 only |
| EXAMPLE 5 | RESIN COATING SUS316L | 42 µm | 169 µm | 8 times (20 pL × 8) | 12 kHz (× 6) 2 kHz (× 2) | Pattern 1 only |
| EXAMPLE 6 | RESIN COATING SUS316L | 42 µm | 84 µm | 8 times (20 pL × 8) | 5 kHz | Pattern 1 to 4 |
| EXAMPLE 7 | RESIN COATING SUS316L | 42 µm | 84 µm | 8 times (20 pL × 8) | 5 kHz | Pattern 1 to 12 |
| EXAMPLE 8 | RESIN COATING SUS316L | 42 µm | 169 µm | 16 times (10 pL × 16) | 5 kHz | Pattern 1 only |
| COMPARA TIVE EXAMPLE 1 | RESIN COATING SUS316L | 84 µm | 84 µm | One time (216 pL) | 5 kHz | Pattern 1 only |
| COMPARA TIVE EXAMPLE 2 | RESIN COATING SUS316L | 42 µm | 84 µm | One time (160 pL) | 5 kHz | Pattern 1 only |

In Example 1, the relation between the thickness h of the powder layer 31 and the center-to-center distance L (distance L between the nearest dots) is h < L. The head 52 divisionally discharge the fabrication liquid 10 by dividing one droplet 10a of the fabrication liquid 10 by eight. In Example 1, a fabrication process of the three-dimensional object was progressed while securing an escaping route for void (air, bubble) as aimed in the present disclosure. Thus, the voids in the three-dimensional object was reduced.

In Example 2, a number of divisional discharge was increased (16 times). Thus, the timing of intersection (contact) of the adjacent dots was further delayed so that the voids in the three-dimensional object was further reduced.

In Example 3, the distance L between the adjacent dots was increased (169 µm).

Thus, the timing of intersection (contact) of the adjacent dots was further delayed so that the voids in the three-dimensional object was further reduced.

In Example 4, in addition to Example 3 (distance L of 169 µm), the liquid amount of droplets 10a applied on the powder layer 31 was controlled, and the number of divisional discharge was reduced (five times). Thus, the fabrication speed was increased.

In Example 5, in addition to Example 3 (distance L of 169 µm), the droplets 10a was discharged with high frequency (12 kHz) until adjacent dots intersect. Thus, the fabrication speed was increased.

In Example 6, the discharge patterns (fabrication patterns) were changed in a four-layers cycle (Patterns 1 to 4). Thus, internal voids slightly remained in the three-dimensional object were periodically dispersed in the three-dimensional object.

In Example 7, the discharge patterns (fabrication patterns) were changed in a twelfth-layers cycle (Patterns 1 to 12). Thus, internal voids slightly remained in the three-dimensional object were further periodically dispersed in the three-dimensional object.

In Example 8, the distance L between the adjacent dots was increased (169 µm). Thus, even when the wettability between the fabrication powder 20 and the fabrication liquid 10 was changed, the voids in the three-dimensional object were reduced.

Here, a wettability between the fabrication powder 20 and the fabrication liquid 10 is treated as a contact angle measured by following method. For example, as similarly to a slide glass on which a double-sided tape is attached, a fabrication powder 20 is applied to a flat plate, a surface of which is adhered with adhesive components. The fabrication powder 20 was filled without gaps on the adhesive component.

Then, a flat plate, a surface layer of which was covered with the fabrication powder 20, was prepared. The head 52 discharged the fabrication liquid 10 having liquid amount of 6 µL to this flat plate. The contact angle between the fabrication powder 20 and the fabrication liquid 10 was defined by a contact angle formed by an edge portion of the droplets 10a of the fabrication liquid 10 at thirty seconds immediately after the discharge process of the droplets 10a and the flat plate covered with the fabrication powder 20. When the contact angle was small, the fabrication liquid 10 easily permeates in the planar direction (X-direction and Y-direction) rather than in the depth direction (Z-direction).

In Comparative Example 1, the thickness h was equal to the distance L (h = L). Thus, there was no escape for the voids (air), and the voids (air) remained between the fabrication layers 30 or interior of the fabrication layer 30.

In Comparative Example 2, although the thickness h was smaller than the distance K (h < L), the fabrication liquid 10 was applied onto the powder layer 31 only once. Thus, there was no escape for the voids (air), and voids (air) remained between the fabrication layers 30 or interior of the fabrication layer 30.

In Comparative Example 3, the fabrication liquid 10 was applied onto the powder layer 31 for a plurality of times. However, the thickness h was larger than the distance L (h > L). Thus, the fabrication liquid 10 did not permeate a surface of the lower layer of the powder layer 31. Thus, the voids remained between the fabrication layers 30.

Next, FIGS. 15A through 15E illustrate an image obtained by transmission X-ray observation of the three-dimensional object for evaluation obtained in Examples 1 to 3 and Comparative Examples 1 and 2.

In Examples 1 to 3, there is almost no difference in contrast in the images. Even when there is a difference in contrast, the difference in contrast exists regularly. Thus, as illustrated in FIGS. 15A through 15E, the voids and the unevenness of voids in the three-dimensional object are prevented in the present disclosure.

In Comparative Examples 1 and 2, a difference in contrast are sparsely observed, and large voids are present in thin colored portions. Further, the voids and unevenness in the voids existed in the three-dimensional object of the Comparative Examples 1 and 2. Thus, the Comparative Examples 1 and 2 could not prevent generation of the voids and unevenness of the voids in the three-dimensional object.

## Claims

1. A method for fabricating a three-dimensional object, the method comprising:
forming a powder layer (31) including fabrication powder (20);
discharging droplets (10a) of fabrication liquid (10) onto the powder layer (31);
repeating the forming and the discharging; and
controlling the discharging to discharge a plurality of the droplets (10a) onto an identical position on a surface of the powder layer (31) so that a thickness of the powder layer (31) is smaller than a distance between the nearest two of the droplets (10a) landed on the powder layer (31), wherein
the droplets (10a) discharged onto the powder layer (31) permeate the powder layer (31) and contact the droplets (10a) in a lower layer of the powder layer (31), and
the droplets (10a) contact the lower layer of the powder layer (31) before the nearest two of the droplets (10a) contact each other.

2. The method according to claim 1, wherein the distance and the thickness satisfy a relation of 8h ≥ L > h, where L is the distance and h is the thickness.

3. The method according to claim 2, wherein the distance and the thickness satisfy a relation 4h ≥ L > h, where L is the distance and h is the thickness.

4. The method according to any one of claims 1 through 3, wherein the discharging shifts a discharge position of the droplets (10a) between powder layers (31).

5. The method according to any one of claims 1 through 4, further comprising:
calculating a volume of a fabrication section for fabricating the three-dimensional object from a resolution of the three-dimensional object and the thickness of the powder layer (31); and
calculating a volume of a space excluding a volume of the fabrication powder in the fabrication section from the volume of the fabrication section as a required liquid amount of the fabrication liquid (10),
wherein an amount of droplets (10a) of the fabrication liquid (10) discharged at one time at the discharging is equal to or less than the required liquid amount.

6. The method according to any one of claims 1 through 3, wherein the discharging discharges first to N-th droplets onto the identical position on the surface of the powder layer (31),
the discharging discharges a K-th droplet (10a) after the first droplet and before the N-th droplet, and the droplets (10a) permeate the powder layer (31) and contact the droplets (10a) in the lower layer of the powder layer (31) when the K-th droplet is discharged onto the surface of the powder layer (31), and
the discharging discharges K-th to N-th droplets (10a) with a liquid amount different from a liquid amount of first to (K-1) th droplets (10a),
wherein K is integer from 1 to n, and n is integer equal to or larger than two.

7. The method according to any one of claims 1 through 3, wherein the discharging discharges first to N-th droplets (10a) onto the identical position on the surface of the powder layer (31),
the discharging discharges a K-th droplet (10a) after the first droplet and before the N-th droplet, and the droplets (10a) permeate the powder layer (31) and contact the droplets (10a) in the lower layer of the powder layer (31) when the K-th droplet is discharged onto the surface of the powder layer (31), and
the discharging discharges K-th to N-th droplets (10a) with a frequency higher than a frequency for discharging first to (K-1) th droplets (10a),
wherein K is integer from 1 to n, and n is integer equal to or larger than two.

8. An apparatus for fabricating a three-dimensional object, the apparatus comprising:
a fabrication chamber (22) to form a powder layer (31) including fabrication powder (20);
a liquid discharge head (52) to discharge droplets (10a) of fabrication liquid (10) onto the powder layer (31) formed in the fabrication chamber (22); and
a controller (500) to control the liquid discharge head (52) to discharge the droplets (10a) onto a surface of the powder layer (31), wherein
the controller (500) is configured to control the liquid discharge head (52) to discharge a plurality of the droplets (10a) onto an identical position on a surface of the powder layer (31), so that a thickness of the powder layer (31) is smaller than a distance between the nearest two of the droplets (10a) landed on the powder layer (31), and at a timing such that
the droplets (10a) discharged onto the powder layer (31) permeate the powder layer (31) and contact the droplets (10a) in a lower layer of the powder layer (31), and
the droplets (10a) contact the lower layer of the powder layer (31) before the nearest two of the droplets (10a) contact each other.

## Patentansprüche

1. Verfahren zur Herstellung eines dreidimensionalen Objekts, wobei das Verfahren Folgendes umfasst:
Bilden einer Pulverschicht (31), die Herstellungspulver (20) umfasst;
Abgeben von Tröpfchen (10a) einer Herstellungsflüssigkeit (10) auf die Pulverschicht (31); Wiederholen des Bildens und des Abgebens; und
Steuern des Abgebens, um eine Vielzahl der Tröpfchen (10a) auf eine identische Position auf einer Oberfläche der Pulverschicht (31) abzugeben, sodass eine Stärke der Pulverschicht (31) kleiner als ein Abstand zwischen den nächstgelegenen zwei der Tröpfchen (10a) ist, die auf der Pulverschicht (31) gelandet sind, wobei
die Tröpfchen (10a), die auf die Pulverschicht (31) abgegeben werden, die Pulverschicht (31) durchdringen und die Tröpfchen (10a) in einer unteren Schicht der Pulverschicht (31) berühren, und
die Tröpfchen (10a) die untere Schicht der Pulverschicht (31) berühren, bevor die nächstgelegenen zwei der Tröpfchen (10a) einander berühren.

2. Verfahren nach Anspruch 1, wobei der Abstand und die Stärke eine Beziehung von 8h ≥ L > h erfüllen, wobei L der Abstand und h die Stärke ist.

3. Verfahren nach Anspruch 2, wobei der Abstand und die Stärke eine Beziehung von 4h ≥ L > h erfüllen, wobei L der Abstand und h die Stärke ist.

4. Verfahren nach einem der Ansprüche 1 bis 3, wobei das Abgeben eine Abgabeposition der Tröpfchen (10a) zwischen Pulverschichten (31) verschiebt.

5. Verfahren nach einem der Ansprüche 1 bis 4, ferner umfassend:
Berechnen eines Volumens eines Herstellungsabschnitts zur Herstellung des dreidimensionalen Objekts von einer Auflösung des dreidimensionalen Objekts und der Stärke der Pulverschicht (31); und
Berechnen des Volumens eines Raums mit Ausnahme eines Volumens des Herstellungspulvers im Herstellungsabschnitt vom Volumen des Herstellungsabschnitts als erforderliche Flüssigkeitsmenge der Herstellungsflüssigkeit (10),
wobei eine Menge von Tröpfchen (10a) der Herstellungsflüssigkeit (10), die zu einem Zeitpunkt beim Abgeben abgegeben wird, gleich oder kleiner als die erforderliche Flüssigkeitsmenge ist.

6. Verfahren nach einem der Ansprüche 1 bis 3, wobei beim Abgeben zuerst an N-te Tröpfchen auf die identische Position auf der Oberfläche der Pulverschicht (31) abgegeben werden,
beim Abgeben ein K-tes Tröpfchen (10a) nach dem ersten Tröpfchen und vor dem N-ten Tröpfchen abgegeben wird und die Tröpfchen (10a) die Pulverschicht (31) durchdringen und die Tröpfchen (10a) in der unteren Schicht der Pulverschicht (31) berühren, wenn das K-te Tröpfchen auf die Oberfläche der Pulverschicht (31) abgegeben wird, und
beim Abgeben K-te bis N-te Tröpfchen (10a) mit einer Flüssigkeitsmenge, die sich von einer Flüssigkeitsmenge der ersten bis (K-1)-ten Tröpfchen (10a) unterscheidet, abgegeben wird,
wobei K eine ganze Zahl von 1 bis n ist und n eine ganze Zahl gleich oder größer als zwei ist.

7. Verfahren nach einem der Ansprüche 1 bis 3, wobei beim Abgeben erste bis N-te Tröpfchen (10a) auf die identische Position auf der Oberfläche der Pulverschicht (31) abgegeben werden,
beim Abgeben ein K-tes Tröpfchen (10a) nach dem ersten Tröpfchen und vor dem N-ten Tröpfchen abgegeben wird und die Tröpfchen (10a) die Pulverschicht (31) durchdringen und die Tröpfchen (10a) in der unteren Schicht der Pulverschicht (31) berühren, wenn das K-te Tröpfchen auf die Oberfläche der Pulverschicht (31) abgegeben wird, und
beim Abgeben K-te bis N-te Tröpfchen (10a) mit einer Häufigkeit, die höher ist als eine Häufigkeit für das Abgeben der ersten bis (K-1)-ten Tröpfchen (10a), abgegeben werden,
wobei K eine ganze Zahl von 1 bis n ist und n eine ganze Zahl gleich oder größer als zwei ist.

8. Vorrichtung zur Herstellung eines dreidimensionalen Objekts, wobei die Vorrichtung Folgendes umfasst:
eine Herstellungskammer (22) zum Bilden einer Pulverschicht (31), die Herstellungspulver (20) umfasst;
einen Flüssigkeitsabgabekopf (52) zum Abgeben von Tröpfchen (10a) einer Herstellungsflüssigkeit (10) auf die in der Herstellungskammer (22) gebildete Pulverschicht (31); und
eine Steuervorrichtung (500) zum Steuern des Flüssigkeitsabgabekopfes (52) zum Abgeben der Tröpfchen (10a) auf eine Oberfläche der Pulverschicht (31), wobei
die Steuervorrichtung (500) konfiguriert ist, um den Flüssigkeitsabgabekopf (52) so zu steuern, dass eine Vielzahl der Tröpfchen (10a) auf eine identische Position auf einer Oberfläche der Pulverschicht (31) abgegeben wird, sodass eine Stärke der Pulverschicht (31) kleiner ist als ein Abstand zwischen den nächstgelegenen zwei der Tröpfchen (10a), die auf der Pulverschicht (31) gelandet sind, und zu einem solchen Zeitpunkt, dass
die Tröpfchen (10a), die auf die Pulverschicht (31) abgegeben werden, die Pulverschicht (31) durchdringen und die Tröpfchen (10a) in einer unteren Schicht der Pulverschicht (31) berühren, und
die Tröpfchen (10a) die untere Schicht der Pulverschicht (31) berühren, bevor die nächstgelegenen zwei der Tröpfchen (10a) einander berühren.

## Revendications

1. Procédé de fabrication d'un objet tridimensionnel, le procédé comprenant :
la formation d'une couche de poudre (31) comprenant de la poudre de fabrication (20) ;
le déchargement de gouttelettes (10a) de liquide de fabrication (10) sur la couche de poudre (31) ;
la répétition de la formation et du déchargement ; et
le contrôle de la décharge pour décharger une pluralité de gouttelettes (10a) sur une position identique sur une surface de la couche de poudre (31) de sorte qu'une épaisseur de la couche de poudre (31) soit inférieure à une distance entre les deux plus proches des gouttelettes (10a) tombées sur la couche de poudre (31), dans lequel
les gouttelettes (10a) déchargées sur la couche de poudre (31) imprègnent la couche de poudre (31) et entrent en contact avec les gouttelettes (10a) dans une couche inférieure de la couche de poudre (31), et
les gouttelettes (10a) entrent en contact avec la couche inférieure de la couche de poudre (31) avant que les deux gouttelettes (10a) les plus proches n'entrent en contact.

2. Procédé selon la revendication 1, dans lequel la distance et l'épaisseur satisfont à une relation 8h ≥ L> h, où L est la distance et h est l'épaisseur.

3. Procédé selon la revendication 2, dans lequel la distance et l'épaisseur satisfont à une relation 4h ≥ L> h, où L est la distance et h est l'épaisseur.

4. Procédé selon l'une quelconque des revendications 1 à 3, dans lequel la décharge décale une position de décharge des gouttelettes (10a) entre les couches de poudre (31).

5. Procédé selon l'une quelconque des revendications 1 à 4, comprenant en outre :
le calcul d'un volume d'une section de fabrication pour fabriquer l'objet tridimensionnel à partir d'une résolution de l'objet tridimensionnel et de l'épaisseur de la couche de poudre (31) ; et
le calcul d'un volume d'un espace excluant un volume de la poudre de fabrication dans la section de fabrication à partir du volume de la section de fabrication en tant que quantité de liquide requise du liquide de fabrication (10),
dans lequel une quantité de gouttelettes (10a) du liquide de fabrication (10) déchargée en une seule fois à la décharge est égale ou inférieure à la quantité de liquide requise.

6. Procédé selon l'une quelconque des revendications 1 à 3, dans lequel la décharge décharge des première à N-ième gouttelettes sur la position identique sur la surface de la couche de poudre (31),
la décharge décharge une K-ième gouttelette (10a) après la première gouttelette et avant la N-ième gouttelette, et les gouttelettes (10a) imprègnent la couche de poudre (31) et entrent en contact avec les gouttelettes (10a) dans la couche inférieure de la couche de poudre (31) lorsque la K-ième gouttelette est déchargée sur la surface de la couche de poudre (31), et
la décharge décharge les K-ième à N-ième gouttelettes (10a) avec une quantité de liquide différente d'une quantité de liquide des première à (K - 1) ème gouttelettes (10a),
dans lequel K est un entier de 1 à n, et n est un entier égal ou supérieur à deux.

7. Procédé selon l'une quelconque des revendications 1 à 3, dans lequel la décharge décharge des première à N-ième gouttelettes (10a) sur la position identique sur la surface de la couche de poudre (31),
la décharge décharge une K-ième gouttelette (10a) après la première gouttelette et avant la N-ième gouttelette, et les gouttelettes (10a) imprègnent la couche de poudre (31) et entrent en contact avec les gouttelettes (10a) dans la couche inférieure de la couche de poudre (31) lorsque la K-ième gouttelette est déchargée sur la surface de la couche de poudre (31), et
la décharge décharge des K-ième à N-ième gouttelettes (10a) avec une fréquence supérieure à une fréquence de décharge des première à (K - 1) ième gouttelettes (10a),
dans lequel K est un entier de 1 à n, et n est un entier égal ou supérieur à deux.

8. Appareil pour fabriquer un objet tridimensionnel, l'appareil comprenant :
une chambre de fabrication (22) pour former une couche de poudre (31) comprenant de la poudre de fabrication (20) ;
une tête à décharge de liquide (52) pour décharger des gouttelettes (10a) de liquide de fabrication (10) sur la couche de poudre (31) formée dans la chambre de fabrication (22) ; et
un contrôleur (500) pour contrôler la tête de décharge de liquide (52) pour décharger les gouttelettes (10a) sur une surface de la couche de poudre (31), dans lequel
le contrôleur (500) est configuré pour contrôler la tête de décharge de liquide (52) pour décharger une pluralité de gouttelettes (10a) sur une position identique sur une surface de la couche de poudre (31), de sorte qu'une épaisseur de la couche de poudre (31) soit inférieure à une distance entre les deux plus proches des gouttelettes (10a) tombées sur la couche de poudre (31), et à un temps tel que
les gouttelettes (10a) déchargées sur la couche de poudre (31) imprègnent la couche de poudre (31) et entrent en contact avec les gouttelettes (10a) dans une couche inférieure de la poudre (31), et
les gouttelettes (10a) sont en contact avec la couche inférieure de la couche de poudre (31) avant que les deux gouttelettes (10a) les plus proches n'entrent en contact.
